# EUROPEAN PATENT SPECIFICATION

(11) **EP 4 299 849 B1**
(45) Date of publication and mention of the grant of the patent: **08.07.2026**
(21) Application number: 23210222.8
(22) Date of filing: 11.05.2017
(51) Int. Cl.: E02F 9/28

(54) **STABILIZING FEATURES IN A WEAR MEMBER ASSEMBLY**
STABILISIERUNG VON MERKMALEN IN EINER VERSCHLEISSELEMENTANORDNUNG
ÉLÉMENTS DE STABILISATION DANS UN ENSEMBLE D'ÉLÉMENT D'USURE

(30) Priority: 13.05.2016 US 201662335789 P; 03.01.2017 US 201762441779 P; 08.05.2017 US 201715589647
(43) Date of publication of application: 03.01.2024
(62) Divisional of application: 17796874.0
(73) Proprietor: Hensley Industries, Inc., Dallas, TX 75229 (US)
(72) Inventor: BILAL, Mohamad, Little Elm, 75068 (US); DIAZ, Isai, Arlington, 76006 (US)
(74) Representative: Murgitroyd & Company

(56) References cited:
- CA-A1- 2 819 753
- GB-A- 923 828
- US-A- 3 675 350
- US-A- 5 075 986
- US-A1- 2013 180 137

## Description

### TECHNICAL FIELD

This disclosure is generally directed to ground engaging wear member assemblies including adapters for securing excavating wear members to bucket lips. More particularly, this disclosure is directed to stabilizing load bearing surfaces between adjacent wear members.

### BACKGROUND

Material displacement apparatuses, such as excavating buckets found on construction, mining, and other earth moving equipment, often include replaceable wear portions such as earth engaging teeth. These are often removably attached to larger base structures, such as excavating buckets, and come into abrasive, wearing contact with the earth or other material being displaced. For example, excavating tooth assemblies provided on digging equipment, such as excavating buckets and the like, typically comprise a relatively massive adapter portion which is suitably anchored to the forward bucket lip. The adapter portion typically includes a forwardly projecting nose. A replaceable tooth typically includes a rear-facing cavity that releasably receives the adapter nose. To retain the tooth on the adapter nose, generally aligned transverse openings may be formed on both the tooth and the adapter nose, and a suitable connector structure is driven into and forcibly retained within the aligned openings to releasably anchor the replaceable tooth on its associated adapter nose.

During normal operations, the tooth experiences loading in multiple directions. If the tooth is not positioned on the nose in a stable manner, the loads experienced by the tooth can cause additional wear on the adapter. A need accordingly exists for an improved adapter nose and corresponding opening in the tooth.

Reference is made to the documents US3675350A, GB923828A, CA2819753 A1, US 5 075 986 A, and US 2013/180137 A1 which have been cited as representative of the state of the art.

### SUMMARY

It will be appreciated that the scope of the invention is in accordance with the claims.

According to the invention a hollow ground-engaging wear member is provided according to claims 1 and 10 and a support structure arranged to receive a wear member according to claim 11.

### BRIEF DESCRIPTION OF THE DRAWINGS

The accompanying drawings illustrate implementations of the systems, devices, and methods disclosed herein and together with the description, serve to explain the principles of the present disclosure.
Fig. 1 is view of an earth engaging wear member assembly according to the invention.
Fig. 2 illustrates a perspective view of an adapter nose with a bearing surface portion on a top and bottom surface according to the invention.
Figs. 3A and 3B are diagrams showing longitudinal cross-sectional views of the bearing surface portion in the nose of the adapter according to the invention.
Figs. 4A and 4B are diagrams showing transverse cross-sectional views of the bearing surface portion in the nose according to the invention.
Fig. 5 is a top view of the nose with a bearing surface portion according to the invention.
Fig. 6 is a front view of the nose with a bearing surface portion according to the invention.
Fig. 7A is a perspective view of a tooth having a protrusion corresponding to the bearing surface portion in the nose according to the invention.
Fig. 7B is a longitudinal cross-sectional view of the tooth with the protrusion according to the invention.
Figs. 8 and 9 are transverse cross-sectional views of the tooth with the protrusion according to the invention.
Fig. 10 is a rear view of the tooth looking into the cavity according to the invention.
Fig. 11A is an exploded perspective view of an earth engaging wear member assembly according to one example of principles described herein.
Fig. 11B illustrates an adapter nose looking along the longitudinal axis of the nose according to one example of principles described herein.
Fig. 11C illustrates a side view of the adapter nose according to one example of principles described herein.
Fig. 12A illustrates the tooth looking into the cavity according to one example of principles described herein.
Fig. 12B illustrates a cross-sectional side view of the tooth assembly according to one example of principles described herein.
Fig. 13 illustrates a perspective view of the adapter nose according to one example of principles described herein.
Fig. 14A illustrates an adapter nose with torsion control features according to one example of principles described herein.
Fig. 14B illustrates a side view of an adapter nose with torsion control features according to one example of principles described herein.
Fig. 14C illustrates a perspective view of an adapter nose with torsion control features according to one example of principles described herein.
Fig. 14D illustrates a top view of an adapter nose with torsion control features according to one example of principles described herein.
Fig. 15 illustrates a diagram showing a tooth having a cavity designed to fit an adapter nose with torsion control features according to one example of principles described herein.
Fig. 16A illustrates a cross-section of the adapter nose orthogonal to the longitudinal axis according to one example of principles described herein.
Fig. 16B illustrates a cross-section of the adapter nose with torsion control features orthogonal to the longitudinal axis according to one example of principles described herein.
Fig. 16C illustrates a cross-section of the forward portion of the adapter nose according to one example of principles described herein.
Fig. 16D illustrates a cross-section of the adapter nose with offset torsion control features according to one example of principles described herein.

These Figures will be better understood by reference to the following Detailed Description.

### DETAILED DESCRIPTION

The present disclosure is directed to an earth engaging wear member assembly that includes an adapter nose securable to a bucket lip. The earth engaging wear member assembly also includes a tooth or other wear member, such as an intermediate adapter, that is securable to the adapter nose. The wear member includes a rear facing cavity designed to fit over the adapter nose. The nose may include a front set of surfaces and a rear set of surfaces, and in some implementations, both the front set of surfaces and the rear set of surfaces may form a substantially octagonal shape in transverse cross-section. Various surfaces of both the front set of surfaces and the rear set of surfaces may be fit (or bearing) surfaces while other surfaces of the front set of surfaces and rear set of surfaces may be non-fit (or non-bearing) surfaces. In some particular embodiments, the top surface and the bottom surface of the rear set of surfaces may be fit surfaces and include an interference bearing feature such as a protrusion on one of the tooth or adapter and a matching indent on the other of the tooth or adapter. These may cooperate to distribute vertical loading in a manner assisting with stability and alignment of the wear member on the adapter nose. As used herein, a fit surface is a load bearing surface.

In some implementations, the adapter of the earth engaging wear assembly includes fit surfaces on angled side surfaces. These fit surfaces may be disposed in a manner that provides stabilizing contact on more than one fit surface when the earth engaging wear assembly is subjected to a vertical load or a horizontal load. For example, an applied vertical downward load may be supported by two angled fit surfaces, and an applied vertical upward load may be supported by two separate angled fit surfaces. Likewise, a left horizontal load may be supported by two angled fit surfaces and a right horizontal load may be supported by two angled fit surfaces. In some implementations, a set of angled fit surfaces are disposed at a distal or leading portion of the adapter nose and another set of angled fit surfaces are disposed at a proximal or trailing portion of the adapter nose. In this manner, a wear member, such as a tooth, may be supported by angled fit surfaces at both at the distal end and the proximal end of the adapter nose.

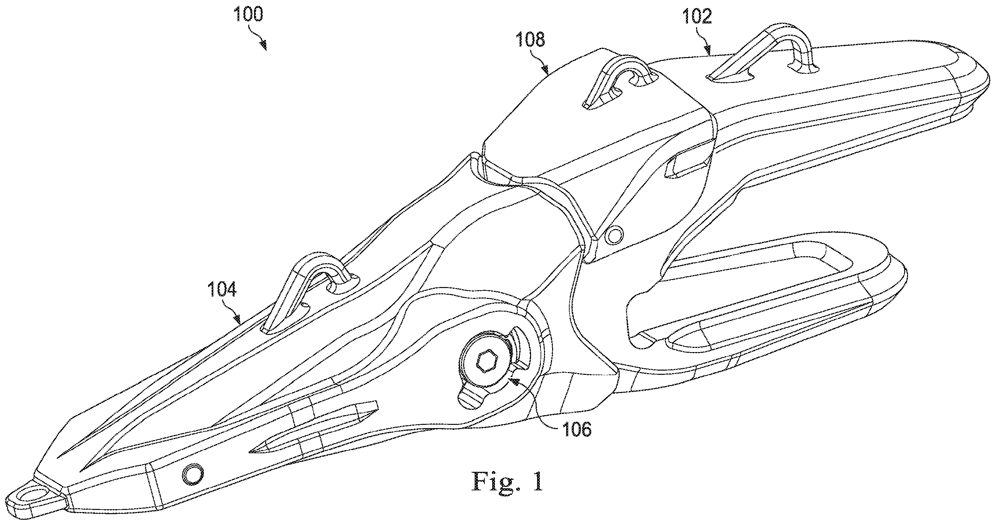

Fig. 1 is view of an exemplary earth engaging wear member assembly 100 according to the invention. In the implementation shown, the earth engaging wear member assembly 100 includes a tooth (or wear member) 104, an adapter 102, and a locking pin 106. In this example, the wear assembly 100 also includes a shroud wear member 108. The adapter 102 includes a hole (not shown) for receiving the locking pin 106. The tooth 104 also includes a hole through which the locking pin 106 can be inserted. The locking pin 106 may secure the tooth 104 onto the adapter 102. The adapter 102 may also be referred to herein as a support structure since it provides stabilizing support to an additional component, which in this implementation is the tooth 104.

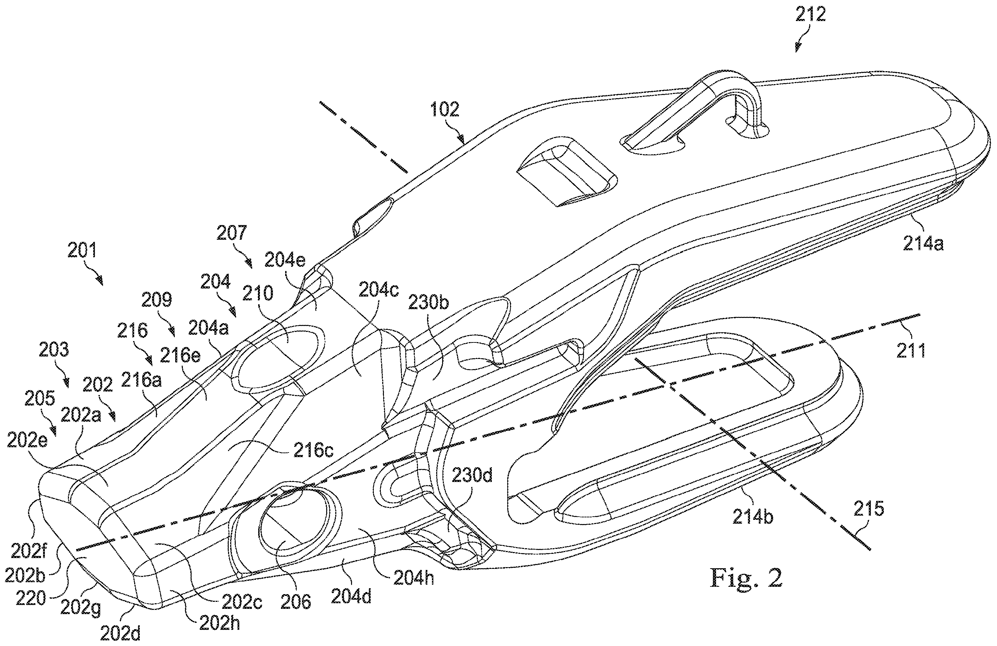

Fig. 2 illustrates a perspective view of the adapter 102. According to the present example, the adapter 102 includes a front end 201 and a rear end 212. The front end 201 includes a nose 203 and the rear end 212 includes a pair of bifurcated legs 214a, 214b arranged to secure the adapter 102 to a bucket lip (not shown). A longitudinal axis 211 is shown through the front and 201 and the rear end 212. A transverse axis 215 is shown for reference in a position that would run parallel to an edge of the bucket lip (not shown).

According to the present example, the nose 203 includes a front portion 205, a rear portion 207, and an intermediate portion 209 extending between the front portion 205 and the rear portion 207. The front portion 205 includes a forward facing end surface 220 and a plurality of outwardly facing surfaces 202 in an octagonal arrangement adjacent the end surface 220. In this implementation, each of the surfaces 202 is angled with respect to the longitudinal axis 211. Further, at least four of the surfaces are angled relative to the transverse axis 215. In some examples, at least four of the plurality of surfaces 202 may be load bearing fit surfaces. For example, in some implementations, the surfaces 202 may include angled surfaces 202a, 202b, 202c, and 202d as load bearing fit surfaces. In other implementations, the surfaces 202 may include vertical and horizontal surfaces 202e, 202f, 202g, and 202h as load bearing fit surfaces. In some implementations, each of the surfaces 202 may be substantially planar, while in other implementations, only four of the eight surfaces 202 are substantially planar. In yet other implementations, a different number of the eight surfaces 202 are substantially planar.

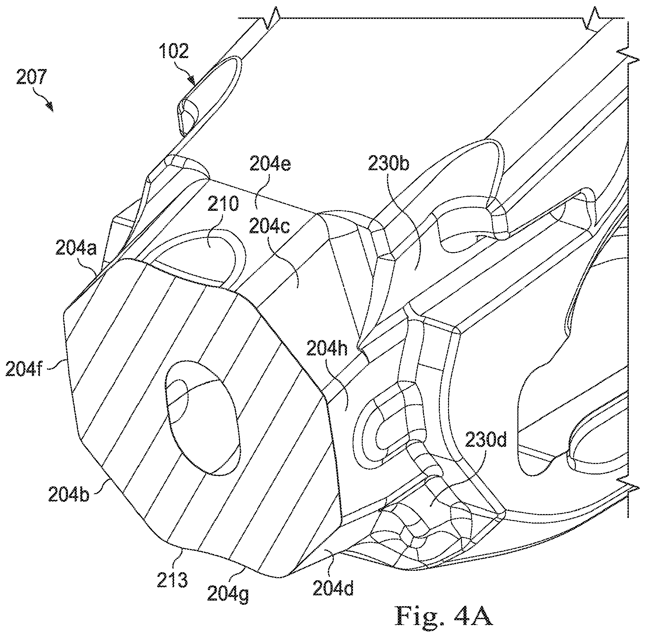

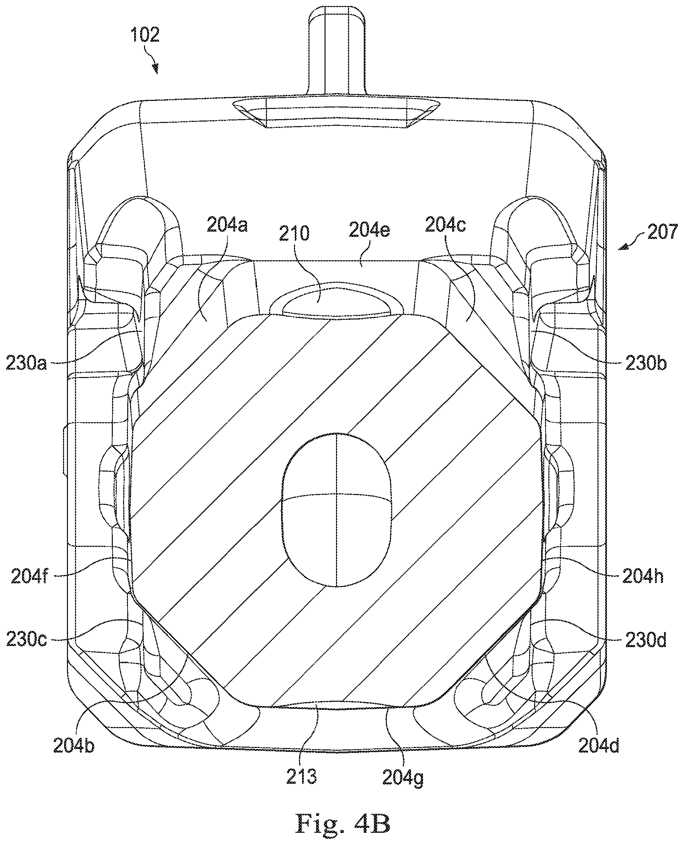

In the present example, the rear portion 207 also includes a plurality of outwardly facing surfaces 204 in an octagonal arrangement. Each of the surfaces 204 are angled with respect to the longitudinal axis. Each of the rear surfaces 204 may be angled differently with respect to the longitudinal axis. For example, the side surfaces 204f, 204h may be angled differently with respect to the longitudinal axis than are the top and bottom surfaces 204e, 204g. In the present example, the rear surfaces 204 are angled with respect to the longitudinal axis at a different angle than the front surfaces 202. Specifically, the rear surfaces 204 are angled at a greater angle with respect to the longitudinal axis than the front surfaces 202. In the examples the various front surfaces 202 may have different angles with respect to the longitudinal axis. Likewise, the rear surfaces 204 have different angles with respect to the longitudinal axis. In such examples, the average angle at which each of the rear surfaces 204 converges toward the longitudinal axis may be greater than the average angle at which the front surfaces 202 converge towards the longitudinal axis. As shown in the perspective view of Fig. 2, the rear surfaces 204 include angled surfaces 204a, 204b, 204c. The opposing side of the nose 203 includes an additional angled surface 204d, which is identified in Figs. 4A and 4B, for example. The rear surfaces 204 also include a top surface 204e and a side surface 204h. The nose 203 also includes a bottom surface 204g and an opposite side surface 204f which are identified in Figs. 4A and 4B, for example. The rear surfaces 204 may also be bearing or fit surfaces. In some examples, each of the rear surfaces 204 may be bearing fit surfaces. In some examples, only the angled surfaces 204a, 204b, 204c, 204d may be fit surfaces. In some examples, only the horizontal and vertical surfaces 204e, 204f, 204g, 204h, may be fit surfaces. In some implementations, each of the surfaces 204 may be substantially planar, while in other implementations, only four of the eight surfaces 204 are substantially planar. In yet other implementations, a different number of the surfaces 204 are substantially planar.

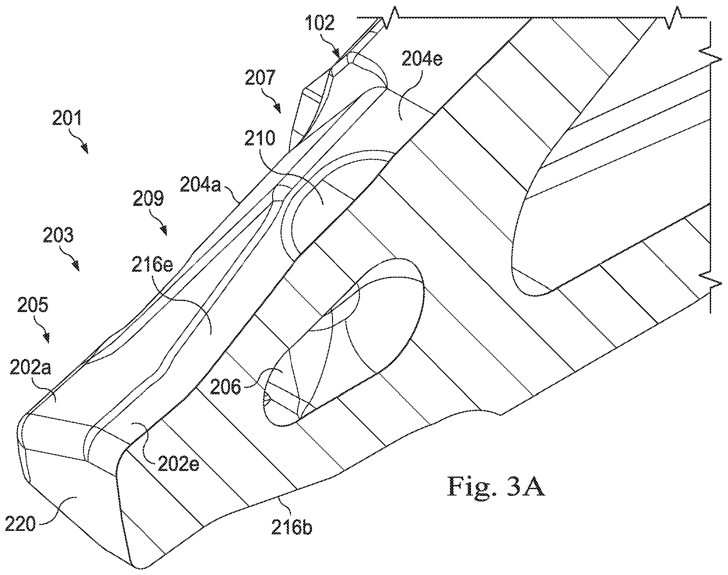

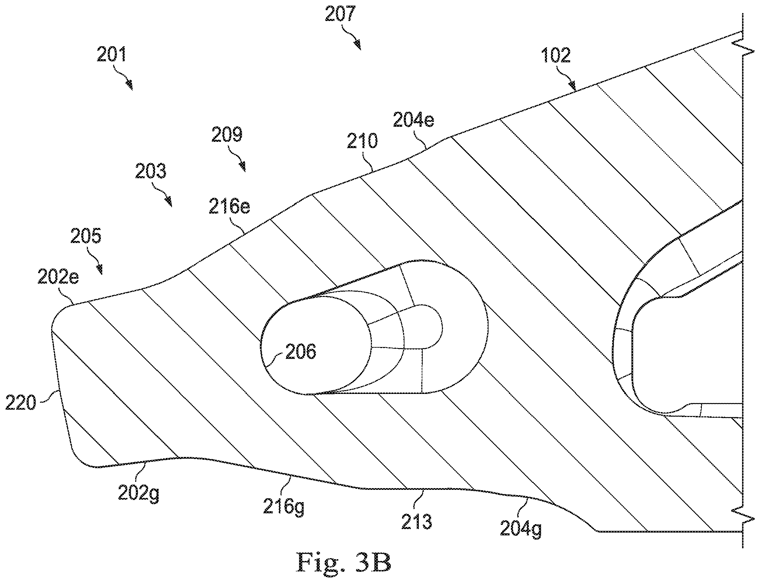

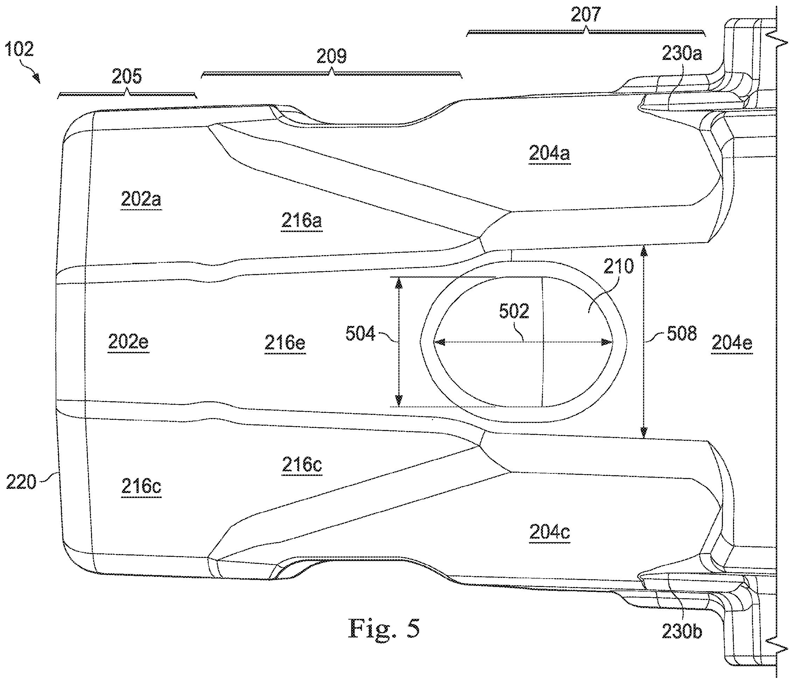

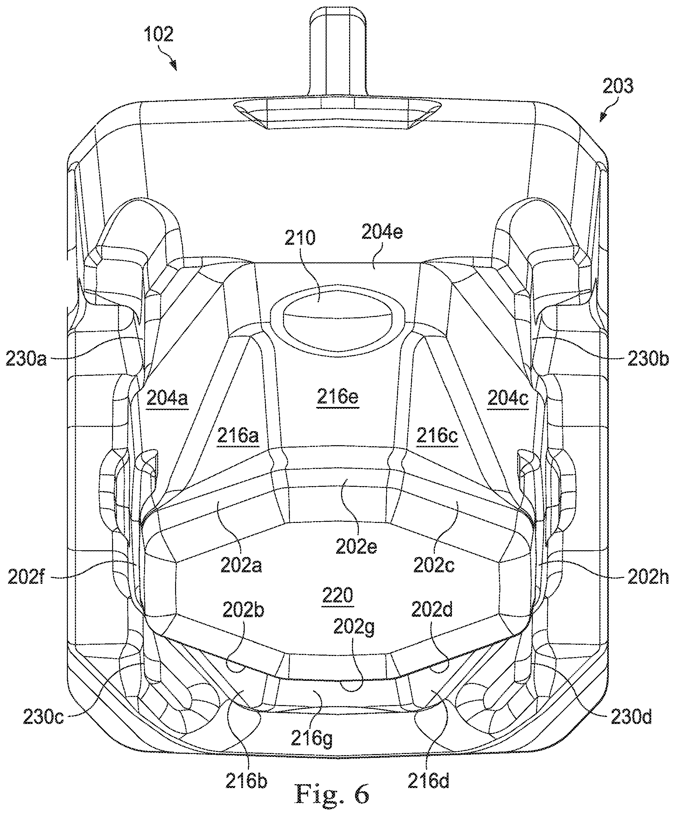

In the present example, the intermediate portion 209 includes a plurality of outwardly facing surfaces 216. These outwardly facing surfaces 216 may extend between and intersect the surfaces 202 and the surfaces 204. In some implementations, the surfaces 216 may be angled differently than the surfaces 202 and the surfaces 204 relative to the longitudinal axis 211. Referring to Fig. 2, the outwardly facing surfaces 216 may include a plurality of surfaces including, among other surfaces, an upper facing surface 216a, a lower facing surface 216b (Figs. 3A and 3B). In this implementation, the side surfaces of the intermediate portion 209 may contain a hole 206. Additional angled surfaces 216c, 216d, 216e, 216f (best seen in Figs. 5 and 6), are disposed about the intermediate portion of the nose.

With reference to Figs. 2, 3A, 3B, 5, and 6, the upper facing surface 216a of the intermediate portion 209 may extend at an angle different than both the adjacent upper surface 204e of the rear portion 207 and the adjacent top surface 202e of the front portion 205. Accordingly, the upper facing surface 216a may be non-planar with the adjacent upper surface 204e of the rear portion 207 and non-planar with the adjacent top surface 202e of the front portion 205. In a similar manner, the lower facing surface 216b of the intermediate portion 209 may extend at an angle different than both the adjacent bottom surface 204g of the rear portion 207 and the bottom surface 202g of the front portion 205.

In the present example, the top surface 204e includes a concave bearing surface 210 positioned thereon. In some examples, the top surface 204e circumscribes the concave bearing surface 210. In some implementations, the concave bearing surface 210 bridges the intersection of the upper facing surface 216a and the top surface 204e. The concave bearing surface 210, in this implementation, is an indentation that may cooperate with a corresponding protrusion on the wear member 104 to provide load bearing stability as well as lateral stability. While not seen from this perspective view, the nose 203 may also have a similar concave bearing surface portion on the bottom surface that is opposite the top surface 204e. In some implementations, the concave bearing surface on the bottom surface may be shaped identically to the concave bearing surface 210 on the top surface 204e. In the present example, the concave bearing surface 210 is substantially elliptical in shape. Other shapes are contemplated as well. For example, instead of being elliptical in shape, the concave bearing surface 210 may be circular or may have some other configuration.

The nose 203 also includes a hole 206 that extends from the side surface 204h to the opposing side surface (not shown in this perspective). In this implementation, the hole 206 is formed in the intermediate portion 209 of the nose 203. The hole 206 is sized and shaped to receive a locking pin. In the present example, the hole 206 is positioned forward of the concave bearing surface 210. In other words, at least a portion of the concave bearing surface 210 is positioned rearward of the hole 206. In some examples, the entire concave bearing surface 210 may be positioned rearward of the hole 206. In other implementations, the hole 206 extends only partially through the nose 203. A corresponding hole 206 may be formed in the opposing side of the nose 203. In these implementations, two separate locking pins may be used to secure the wear member 104 to the adapter 102 (see Fig. 1).

The nose also includes torsion control surfaces 230b, 230d. Torsion control surfaces 230a, 230c are illustrated in Figs. 4B and 6. The torsion control features 230a, 230b, 230c, and 230d may be substantially planar surfaces that are outward facing and are sized and shaped to fit against corresponding surfaces within the cavity of the tooth, which will be described in further detail below. In the present example, the torsion control surfaces 230a, 230b, 230c, 230d respectively intersect the angled surfaces 204a, 204b, 204c, 204d of the rear portion 207. Particularly, the torsion control surfaces 230a, 230b, 230c, 230d intersect the angled surfaces 204a, 204b, 204c, 204d near where such surfaces meet the vertical surfaces 204f, 204h. In some examples, the torsion control surfaces 230a, 230b, 230c, 230d may be flush with the vertical surfaces 204f, 204h.

In some examples, the angled surfaces of both the front surfaces 202 and the rear surfaces 204 may be bearing (or fit) surfaces. Specifically, surfaces 202a, 202b, 202c, 202d, 204a, 204b, 204c, 204d may be bearing surfaces. Additionally, the horizontal and top surfaces of the front surfaces 202 and the rear surfaces 204 may be non-bearing (or non-fit) surfaces. Specifically, surfaces 202e, 202f, 202g, 202h, 204e, 204f, 204g, 204h may be non-bearing surfaces. Other combinations of bearing and non-bearing surfaces are contemplated as well.

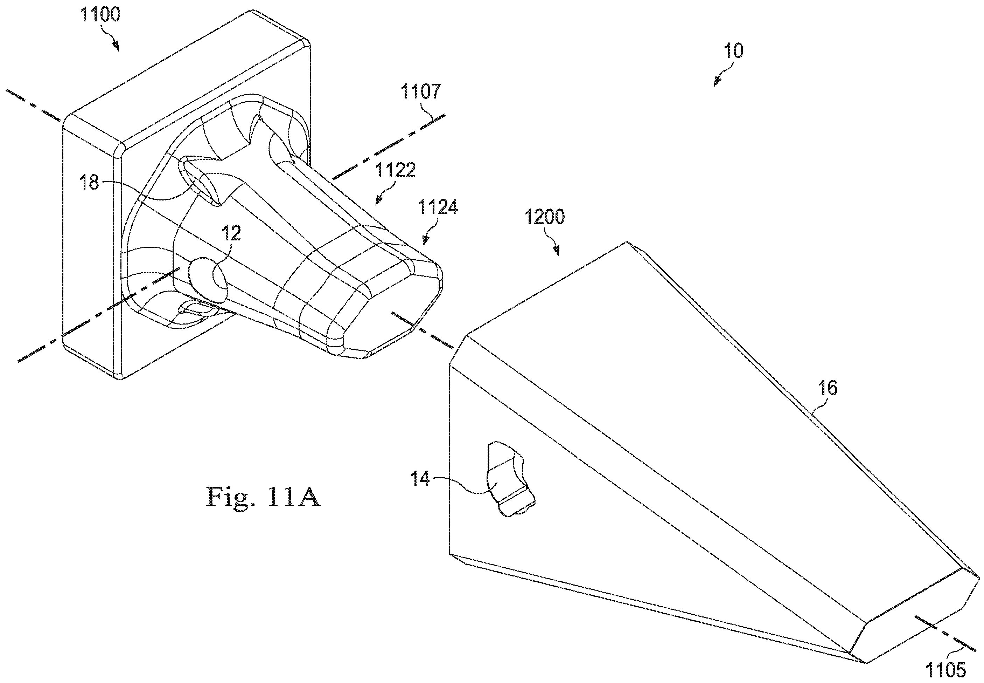

Figs. 3A and 3B are diagrams showing longitudinal cross-sectional views of a portion of the adapter 102, showing the upper concave bearing surfaces 210 and a lower concave bearing surface 213. Fig. 3B in particular shows the bearing surface portion 213 in the bottom surface 204g of the nose of the adapter 102. In some embodiments, the top surface 204e and the bottom surface 204g may both be fit surfaces. In such a case, other surfaces, such as the side surfaces or angled surfaces may be either fit or non-fit surfaces. For example, it may be the case that all angled surfaces are non-fit surfaces while the top, bottom, and side surfaces are fit surfaces. As indicated above, some implementations of the concave bearing surface 210 bridge the intersection of the upper facing surface 216a and the top surface 204e. In such implementations, the upper facing surface 216a may be a non-fit surface, while the concave bearing surface 210 forms a fit surface. In some examples, the concave surfaces 210, 213 may be non-bearing surfaces. In such examples, various combinations of the horizontal, vertical, and angled surfaces may be fit surfaces, and in some instances, only the angled surfaces are fit surfaces. It may be the case that all surfaces are fit surfaces. Other combinations of fit and non-fit surfaces are contemplated. For example, the angled surfaces may be fit surfaces while the horizontal and vertical surfaces are non-fit surfaces in a manner similar to that described below in the text accompanying Figs. 11A-16D.

The bottom concave bearing surface 213 may be substantially identical to the top concave bearing surface portion 210. In some examples, the position and shape of the bottom concave bearing surface portion 213 may mirror the position and shape of the top concave bearing surface portion 210. Accordingly, similar to the arrangement described above, the bottom concave bearing surface 213 may bridge the intersection of the lower facing surface 216b and the bottom surface 204g. In such implementations, the bottom facing surface 216b may be a non-fit surface, while the lower concave bearing surface 213 forms a fit surface. In some examples, the bottom concave bearing surface portion 213 may be longitudinally offset from the top concave bearing surface portion 210. For example, the bottom concave bearing surface portion 213 may be closer or farther from the front of the nose than the top concave bearing surface portion 210.

The concave bearing surface portions 210, 213 in this implementation are formed as indents that have smooth rounded surfaces as the shape transitions from the concave surface to the flat upper surface 204e. The indentation provides lateral stability to the rear of the wear member 104 when subjected to loading during use. In addition, when vertical loads are directed onto the leading tip of the wear member 104, the indentation distributes the load at the rear portion of the wear member and the load is transferred through the concave bearing surface portions 210, 213 to the adapter (or an intermediate adapter if so equipped). In addition, the load bearing concave surface portions 210, 213 provide a smooth surface, with curved sides that aid in lateral stability. Accordingly, lateral loads at the leading tip of the wear member 104 that result in opposite loads at the end of the wear member may be alleviated to some extent by the curved lateral sides of the concave bearing surface portions 210, 213. As can be seen, the indentations are formed on the top surface 204e that is longitudinally angled so as to face the leading end surface 220 of the adapter 102. Accordingly, corresponding protrusions on the inner surface of the wear member 104 may fit directly into the indented bearing surface portion 210 and 213.

Figs. 4A and 4B are diagrams showing transverse cross-sectional views of the concave bearing surface portions 210, 213 in the adapter 102. Figs. 4A and 4B also show each of the rear surfaces 204. Specifically, Figs. 4A and 4B illustrate upwardly facing top surface 204e, outwardly facing side surfaces 204f, 204h, and downwardly facing bottom surface 204g. Figs. 4A and 4B also illustrate outwardly facing angled surfaces 204a, 204b, 204c, 204d. In the exemplary implementation shown, the concave bearing surface portions 210, 213 are formed in the rear portion 207 only in the upwardly facing top surface 204e and the downwardly facing bottom surface 204g, while the outwardly facing side surfaces 204f, 204h and the outwardly facing angled surfaces 204a, 204b, 204c, 204d are all formed to be relatively planar. This may provide additional fit surface support for vertical loading on a supported tooth 104, while providing standard support for horizontal or side to side loading.

Fig. 5 is a top view of the nose 203 of the adapter 102. The concave bearing surface portion 210 is shown extending into and across the intersection of the upper facing surface 216a and the top surface 204e. In some examples, the transverse width 504 of the concave bearing surface portion 210 may be within a range of about 60-80 percent of the transverse width 508 of the top surface 204e. In some examples, the transverse width 504 of the concave bearing surface portion 210 may be about 70% of the transverse width 508 of the top surface 204e. The longitudinal length 502 of the concave bearing surface portion 210 may be similar to the transverse width 504 of the concave bearing surface portion 210. In some examples, the longitudinal length 502 of the concave bearing surface portion 210 may be within a range of about 0-50 percent larger than the transverse width 504. The concave bearing surface portion 210 may be sized to provide stability and increase the surface area of the top surface 204e while minimizing weakening of the adapter 102 through stress risers. Accordingly, the depth of the indented bearing surface portion may be selected to provide the necessary balance of stability and strength. In some implementations, the depth of the bearing surface portion is selected to be within a range of about 0.1 inch to about 0.625 inch, although other depths are contemplated.

Fig. 6 is a front, slightly tilted view of the adapter 102 with the concave bearing surface portion 210. Fig. 6 also illustrates top surface 204e and top surface 202e, and the top surface 216a. Fig. 6 also illustrates rear angled surfaces 204a, 204b, front angled surfaces 202a, 202b, and intermediate non-bearing surfaces 216c and 216f.

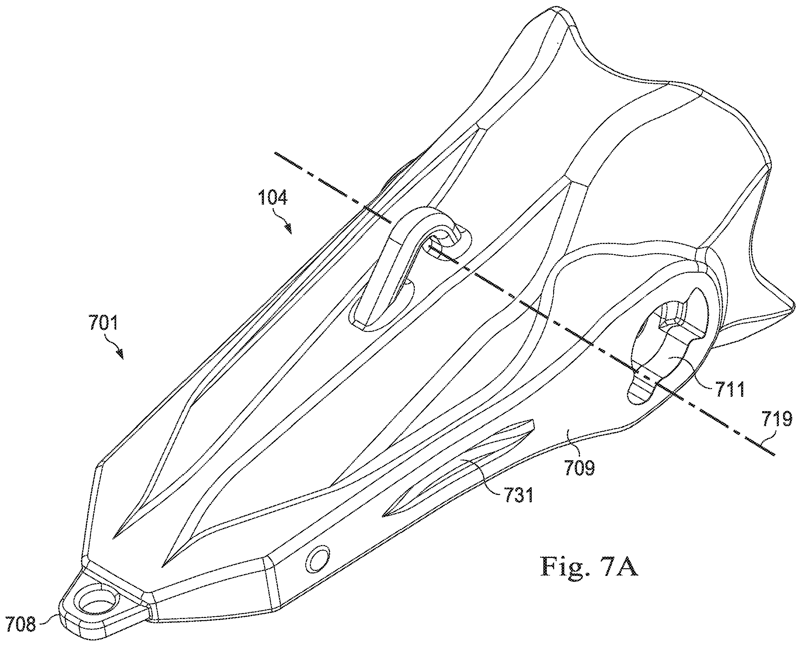

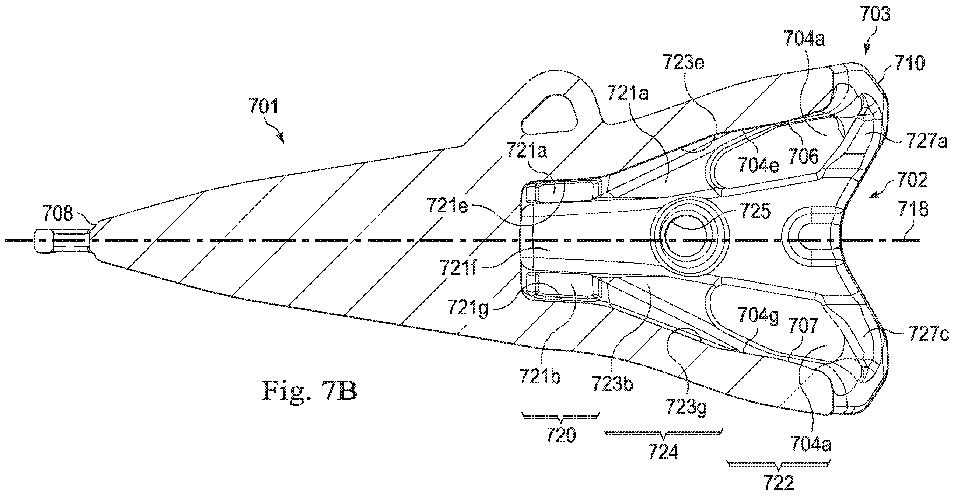

Fig. 7A is a perspective view of the wear member 104 that includes protrusions extending from inner surfaces of the cavity. The wear member 104 may also be referred to as a hollow ground-engaging wear member. Although the wear member 104 may also be referred to as a tooth, the wear member 104 may also form an intermediate adapter or other wear member configured to be supported by or to support other wear members. The wear member 104 includes a leading end 708 at the front end 701 of the wear member. The leading end 708 is arranged to engage or penetrate the ground, and may generally be referred to as the working end. The wear member 104 also includes a rear end, which has a cavity (shown in cross-section in Fig. 7B) that is sized and shaped to receive the nose 203 of the adapter 102.

In the present example, the side 709 of the wear member 104 includes a hole 711 that is sized and shaped to receive the locking pin 106 (Fig. 1). In some implementations, the opposing side of the wear member 104 may include a similar hole. The hole 711 may be positioned such that when the wear member 104 is properly set on the nose 203, the hole 711 is aligned with the hole 206 of the adapter 102. Thus, the locking pin 106 may be inserted through both holes 206, 711 and set so as to hold the wear member 104 on the adapter 102.

In the present example, the wear member 104 includes a wear indicator 731. The wear indicator 731 may be a divot or indentation in the wear member 104 that indicates to an operator when the wear member 104 should be replaced. Specifically, the wear member 104 wears as it is used for digging operations. When it wears to a point where the bottom of the wear indicator 731 is flush with the rest of the wear member 104, then this indicates to an operator that it is time to replace the wear member 104. The wear indicator 731 may be sized and shaped so that it has a depth associated with an expected amount of wear before the wear member 104 should be replaced. This expected amount of wear may be based on historical data that represents the manner in which the wear member 104 wears during normal operations. The wear indicator 731 may be positioned in other places on the wear member 104 as well.

Fig. 7B is a longitudinal cross-sectional view of the wear member 104 showing an upper protrusion 706 and a lower protrusion 707 arranged to correspond to the concave bearing surfaces 210, 213 on the adapter 102. The wear member 104 includes the leading end 708 and a rear end 703. A cavity 702 is formed in the rear end 703, extending longitudinally inward from the rear end 703. The cavity 702 opens to the rear of the wear member 104 and is shaped and sized to fit over the nose 203 of the adapter 102.

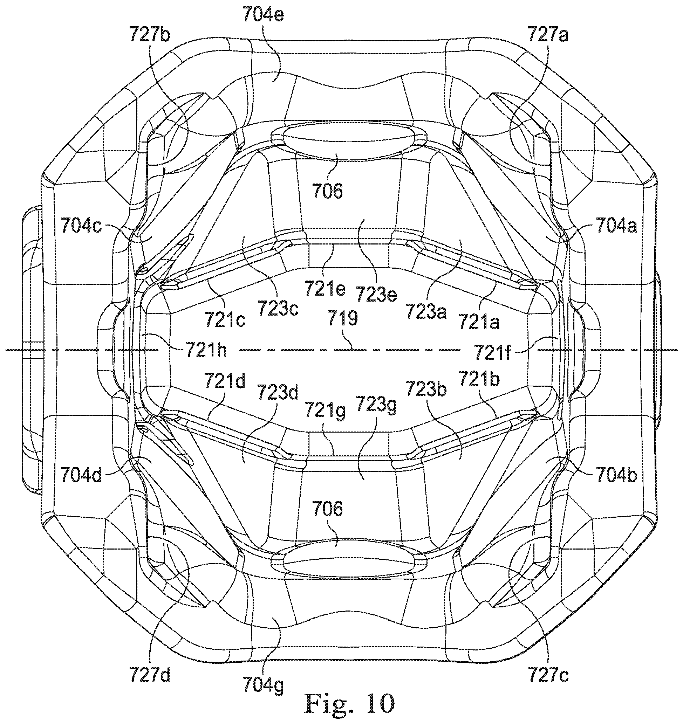

In some implementations, the cavity 702 is shaped to have surfaces corresponding with the various surfaces of the nose 203. In some implementations, since not all surfaces are fit surfaces, only the fit surfaces of the cavity 702 and the nose 203 have the same shape. That is, the cavity 702 may be contoured so that fit surfaces of the cavity 702 match fit surfaces of the adapter 102. Because of this, the descriptions applied herein relating to outer surfaces of the nose 203 are equally applicable to inner surfaces of the cavity 702 of the wear member 104. Similar to the nose 203, the cavity 702 includes a front portion 720, a rear portion 722, and an intermediate portion 724. The cavity 702 also includes a longitudinal axis 718 that in this implementation is coaxial with the longitudinal axis of the wear member 104. A transverse axis 719 (Figs. 7A and 10) extends perpendicular to the longitudinal axis 718 and is arranged to lie substantially parallel to a leading end of a bucket lip.

According to the present example, the cavity 702 includes a front portion 720, an intermediate portion 724, and a rear portion 722. The front portion 720 includes a plurality of substantially planar inwardly facing surfaces 721a, 721b, 721e, 721f, 721g in an octagonal shape (not all eight surfaces are shown in the cross-sectional view of Fig. 7B). These surfaces 721a, 721b, 721e, 721f, 721g may correspond to some of the outwardly facing surfaces 202 of the front portion 205 of the adapter 102. As described above, some surfaces 202 of the front portion 205 may be fit surfaces while some may be non-fit surfaces. The fit surfaces of the adapter 102 may fit with the fit surfaces of the cavity 702 while the non-fit surfaces of the adapter 102 may have slightly different shapes than the non-fit surfaces of the cavity 702 or may be offset from the non-fit surfaces of the cavity 702.

The intermediate portion 724 includes a plurality of substantially planar inwardly facing surfaces 723a, 723b, 723e, 723f, 723g (not all surfaces are shown in the cross-sectional view of Fig. 7B). These surfaces 723a, 723b, 723e, 723f, 723g may correspond to some of the outwardly facing surfaces 216 of the intermediate portion 209 of the adapter 102. Specifically, the fit surfaces of the adapter 102 may fit with the fit surfaces of the cavity 702 while the non-fit surfaces of the adapter 102 may have slightly different shapes than the non-fit surfaces of the cavity 702 or may be offset from the non-fit surfaces of the cavity 702.

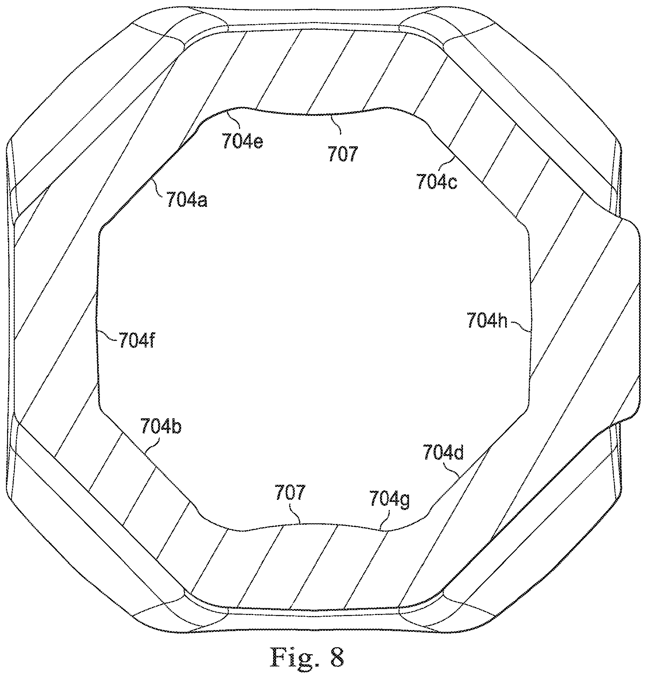

The rear portion 722 includes a plurality of substantially planar inwardly facing surfaces 704a, 704b, 704c, 704d, 704e, 704f, 704g 704h in an octagonal shape (some surfaces are better shown in Figs. 8A and 8B). These surfaces include an upper inner surface 704e and a lower inner surface 704g (which are vertically separated, horizontally separated side surfaces 704f, 704h, upper angled inner surfaces 704a, 704c, and lower angled inner surfaces 704b, 704g. These surfaces 704a, 704b, 704c, 704d, 704e, 704f, 704g 704h may correspond to the outwardly facing surfaces 204 of the front portion 207 of the adapter 102. Specifically, the fit surfaces of the adapter 102 may fit with the fit surfaces of the cavity 702 while the non-fit surfaces of the adapter 102 may have slightly different shapes than the non-fit surfaces of the cavity 702 or may be offset from the non-fit surfaces of the cavity 702.

The cavity 702 includes an upper inward facing surface 704e that is designed to fit with the upward facing surface 204e of the nose 203. In some implementations, the upper inward facing surface 204e may be substantially planar. The upper inward facing surface 704e also includes an upper protrusion 706 extending therefrom. The upper protrusion 706 may also be described as an inwardly protruding bearing surface portion 706 since it protrudes inwardly toward a longitudinal axis 718 of the wear member 104 and the cavity 702. The upper inwardly protruding bearing surface portion 706 is sized and shaped to fit with the concave bearing surface portion 210 of the nose 203. Similarly, the cavity includes a lower inward facing surface 704g that is designed to fit with the downward facing surface 204g of the nose 203. The lower inward facing surface 704g also includes an inwardly protruding bearing surface portion 707. The cavity also includes other surfaces that correspond to the surfaces 202, 204 of the nose 203. The inwardly bearing surface portions 706, 707 are convex and are arranged to support vertically imposed loads at the leading end.

The protrusions 706, 707 may be centrally located on their respective surfaces 704e, 704g. Thus, the protrusions 706, 707 may be circumscribed by planar portions of surfaces 704e, 704g. Additionally, the protrusions 706, 707 may be laterally offset from each other if the corresponding concave bearing surface portions 210, 213 of the nose 203 are offset from each other. Both the upper protrusion 706 and the lower protrusion 706 may form a cross-sectional arc having tangents at oblique angles. In some examples, there may be only a single protrusion 706 on the upper surface 704 and only a single protrusion 707 on the lower surface 704g. In some examples, however, there may be additional protrusions on each surface 704e, 704g.

In the present example, the surfaces of the protrusions 706, 707 may act as bearing surfaces against the bearing surface portions 210, 213 of the adapter nose 203. Thus, the interference features that comprise the protrusions 706, 707 and the bearing surface portions 210, 213 may provide additional support for loads in various directions. Furthermore, by their curved nature, the protrusions and indentations provide lateral stability as well as act as vertical bearing surfaces.

The cavity 702 may also include a hole 725 that aligns with hole 206 when the wear member 104 is placed on the adapter 102. Such alignment allows for the locking pin to be inserted therethrough. In some examples, the wear member 104 may include a single hole on one side of the cavity and in some examples, the wear member 104 may include two holes, one on each side of the cavity 702.

The cavity 702 also includes inward facing torsion control surfaces 727a, 727c. Torsion control surfaces 727b, 727d are shown in Fig. 10. The inward facing torsion control surfaces 727a, 727b, 727c, 727d are sized and shaped to fit against the outward facing torsion control features 230a, 230b, 230c, 230d of the adapter nose.

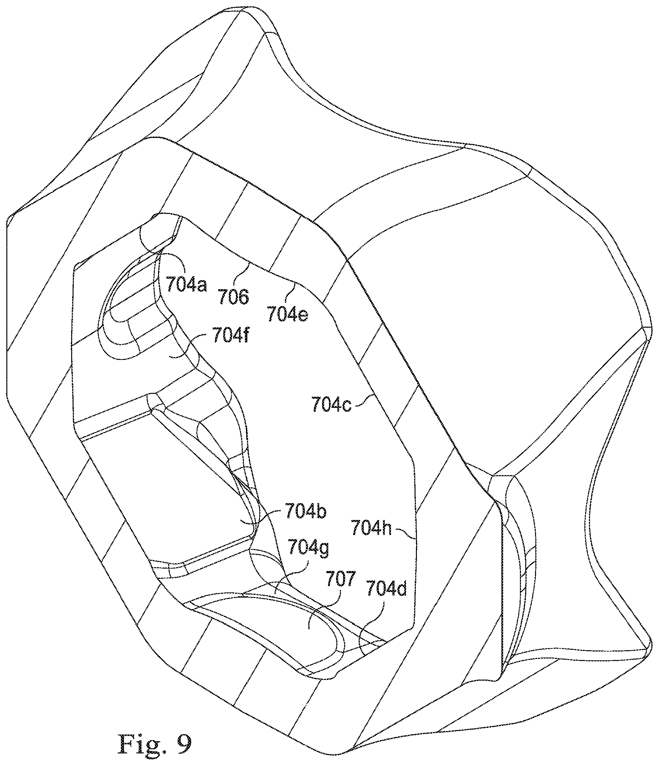

Figs. 8 and 9 are transverse cross-sectional views of the tooth with the protrusion. Fig. 8 illustrates vertically separated opposing inner walls 704e, 704g, which correspond to walls 204e, 204g of the nose 203. Fig. 8 also illustrates horizontally separated opposing inner walls 704f, 804h, which correspond to walls 204f, 204h of the nose 203. Fig. 8 also illustrates the transversely angled inward facing walls 704a, 704b, 704c, 704d that correspond to outward facing transversely angled walls 204a, 204b, 204c, 204d of the nose 203.

Fig. 10 is a rear view of the tooth looking into the cavity 702. Looking into the cavity, the surfaces 721a, 721b, 721c, 721d, 721e, 721f, 721g, 721h of the front portion 720 of the cavity 702 can be seen. Additionally, the surfaces 723a, 723b, 723c, 723d, 723e, 723f, 723g, 723h of the intermediate portion 724 of the cavity 702 can be seen. Furthermore, surfaces 704a, 704b, 704c, 704d, 704e, 704g as well as the protrusions 706, 707 may be seen.

While the concave bearing surface portions 210, 213 and protrusions 706, 707 are substantially elliptical in shape, some embodiments may have polygonal shaped bearing surface portions and protrusions. In some examples, the bearing surface portions may be placed in the side surface near or adjacent the holes 206, 711 through which the lock pin is inserted. Because the protrusions 706, 707 are sized and shaped to match the size and shape of the concave bearing surface portions, the description of either one applies equally to the other.

Although the indentations are described on the adapter 102 and the protrusions are described on inner surfaces of the wear member 104, it should be noted that some implementations are oppositely arranged to have the protrusion on the adapter 102 and the indentations on the wear member 104.

The present disclosure is also directed to an earth engaging wear member assembly that includes an adapter nose securable to a bucket lip and a tooth. The nose includes angled bearing surfaces arranged to be received into a cavity of the tooth. The cavity includes bearing surfaces that correspond with and engage the bearing surfaces of the nose. According to some examples, the adapter nose may include a forward portion at the distal end of the nose and a rear portion at the proximal end of the nose. The rear portion may include eight substantially planar surfaces that converge towards the longitudinal axis of the nose. The forward portion also may include eight substantially planar surfaces that converge towards the longitudinal axis of the nose, but at a shallower angle. In some implementations, both the forward portion and the rear portion thus have substantially octagonal-shaped cross-sections. In some implementations, in the rear portion, the horizontal and vertical surfaces of the octagonal-shaped cross-section may be non-bearing surfaces and the angled surfaces (e.g., the non-horizontal and non-vertical surfaces) may be bearing surfaces. In the forward portion the angled surfaces may be bearing surfaces as well.

Fig. 11A is an exploded perspective view of an earth engaging wear member assembly 10. According to the present example, the wear member assembly 10 includes a nose 1100 and a wear member 1200. An exemplary implementation of the wear member 1200 is a tooth 1200. In another implementation, the wear member 1200 is an intermediate adapter. Other wear members are contemplated. The nose 1100 includes a forward portion 1124 and a rear portion 1122. In the example shown, the nose 1100 extends from a base structure that is shown as a block but represents any additional attachment structure that make support the nose including a bucket receiving portion having bifurcated adapter legs, similar to the adapter 102 in Fig. 1. In some implementations, the nose is securable to a bucket lip of an excavator. The nose may form a part of an adapter or an intermediate adapter, and may also be referred to herein as a support structure since it provides stabilizing support to an additional component, which in this implementation is the tooth 1200. The nose 1100 also includes a hole 12 for receiving a locking pin. In the present example, the nose includes torsion control features 18. The tooth 1200 also includes a hole 14 through which the locking pin can be inserted. Since any of a number of known locking pins may be employed here, details of the locking pin are not included. The tooth 1200 also includes a rear facing cavity (not shown in Fig. 11A) and a ground engaging end as a leading end 16. An axis 1105 extends through the wear member assembly 10.

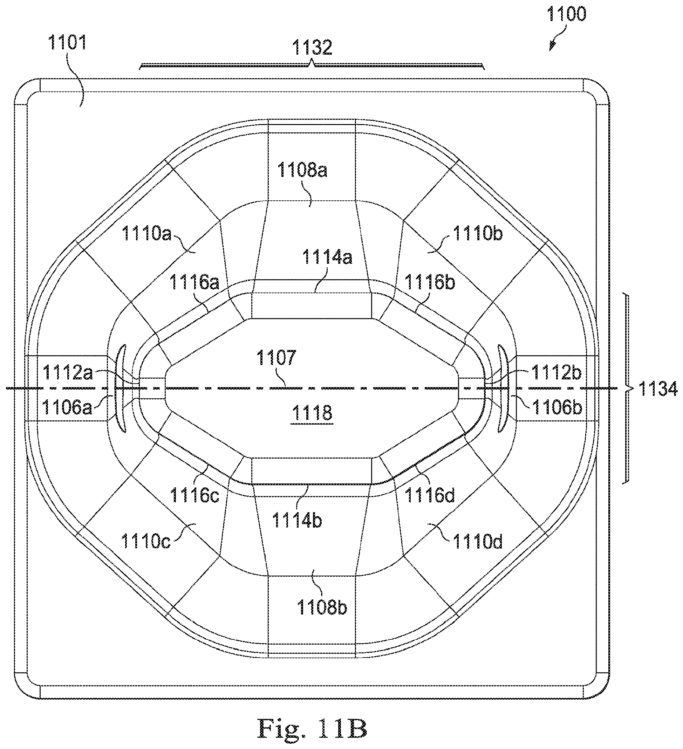

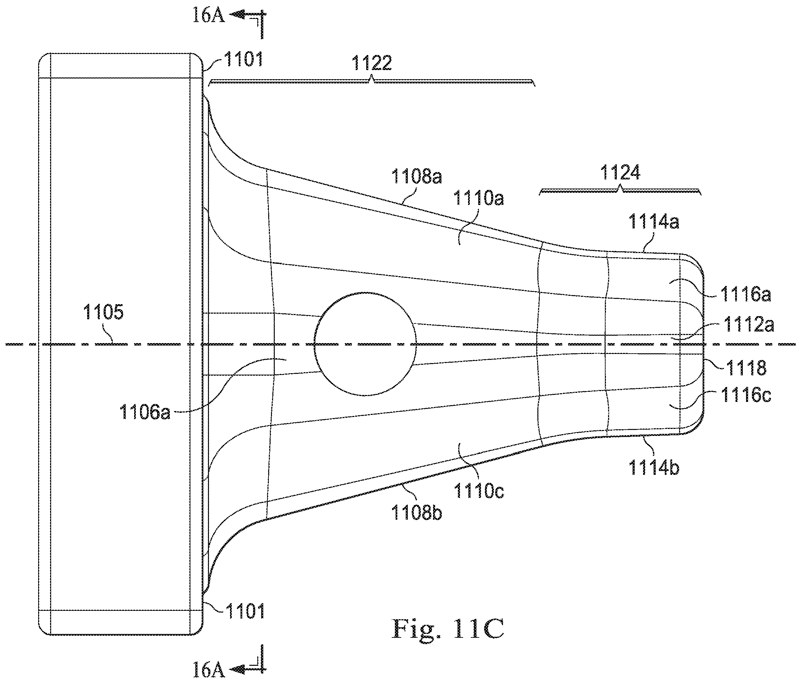

Fig. 11B shows a view of the nose 1100 looking along the longitudinal axis 1105 of the nose 1100. Fig. 11C shows a side view of the nose 1100, looking along a transverse axis 1107. The transverse axis 1107 is aligned in a position that would run parallel to an edge of the bucket lip (not shown). As described above, the nose 1100 may be secured to a bucket lip and includes a forward portion 1124 and a rear portion 1122. The rear portion 1122 includes a set of eight substantially planar surfaces. Particularly the set includes a subset having a top surface 1108a and a bottom surface 1108b, a subset of two side surfaces 1106a, 1106b, and a subset of four angled surfaces 1110a, 1110b, 1110c, 1110d. The top and bottom surfaces may be referred to as horizontal surfaces and the side surfaces may be referred to as vertical surfaces because such surfaces are horizontal and vertical in cross-section. The four angled surfaces 1110a, 1110b, 1110c, 1110d may be bearing surfaces arranged to contact and interface with surfaces of the tooth 1200. Because each bearing surface is angled, each bearing surface is able to resist both horizontal and vertical loading. The angled surfaces may also be referred to as diagonal or oblique surfaces. Both the horizontal surfaces 1108a, 1108b and the vertical surfaces 1106a, 1106b may be non-bearing surfaces.

In this exemplary implementation, each of the eight substantially planar surfaces converges towards the longitudinal axis 1105 of the nose 1100. In some examples, the angle of the eight substantially planar surfaces with respect to the longitudinal axis 1105 may be within a range of about 5-25 degrees. In some examples, the angle may be within a range of about 8-15 degrees. Other ranges are contemplated as well. In this implementation, the top and bottom surfaces 1108a, 1108b may be wider than the side surfaces 1106a, 1106b. Thus, the octagon-shaped cross-section may be different in width 1132 than in height 1134. This helps with torsion control and stability.

In the exemplary implementation shown, the forward portion 1124 also includes a set of eight substantially planar surfaces. Particularly the set includes a subset having a top surface 1114a and a bottom surface 1114b, a subset of two side surfaces 1112a, 1112b, and a subset of four angled surfaces 1116a, 1116b, 1116c, 1116d. The four angled surfaces 1116a, 1116b, 1116c, 1116d may be bearing surfaces arranged to contact and interface with surfaces of the tooth 1200. Because each bearing surface is angled, each bearing surface is able to resist both horizontal and vertical loading. The top and bottom surfaces 1114a, 1114b may also be non-bearing surfaces. In some examples, the side surfaces 1112a, 1112b may be bearing surfaces. In some examples, however, the side surfaces 1112a, 1112b may be non-bearing surfaces. In some implementations, the non-bearing surfaces of the front portion or 1124 or the rear portion 1122 may not be substantially planar.

In some implementations, each of the eight substantially planar surfaces of the forward portion 1124 converges towards the longitudinal axis 1105 of the nose 1100 but at an angle that is shallower than the angle at which the eight substantially planar surfaces of the rear portion 1122 converge towards the longitudinal axis 1105. In some examples, the angle of the eight substantially planar surfaces of the forward portion 1124 with respect to the longitudinal axis 1105 may be within a range of about 0-15 degrees. In some examples, the angle may be within a range of about 1-8 degrees. Additionally, the top and bottom surfaces 1114a, 1114b may be wider than the side services 1112a, 1112b. Thus, the octagon-shaped cross-section is different in width 1132 than it is in height 1134. This also helps with stability and torsion control. In some examples, the ratio of top or bottom surface width to side surface width is different in the forward portion 1124 than it is in the rear portion 1122. For example, the ratio of top or bottom surface width to side surface width may be greater in the forward portion 1124 than it is in the rear portion 1122.

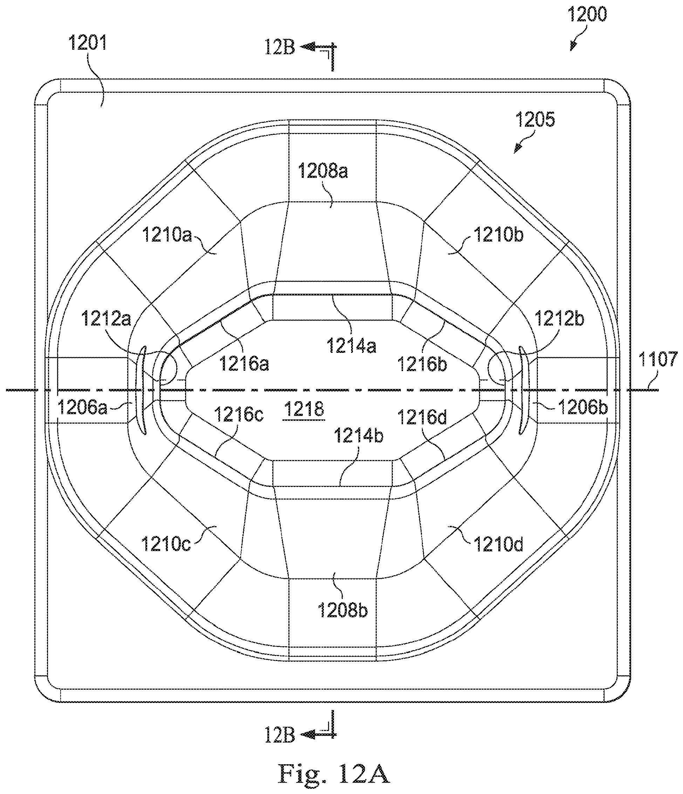

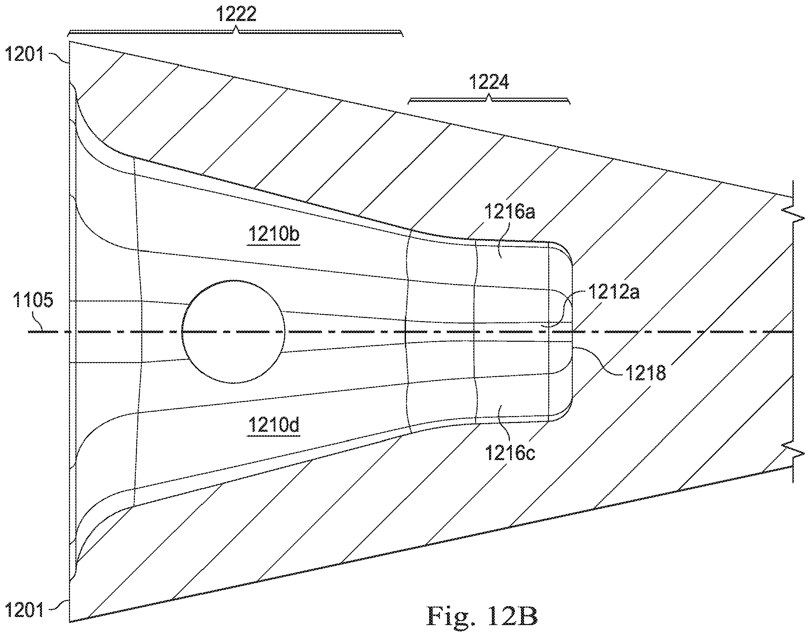

Fig. 12A shows a view of the tooth 1200 looking into the cavity 1205. Fig. 12B is a cross-sectional view of the tooth 1200 along the longitudinal axis 1105, taken along lines 12B-12B in Fig. 12A. The cavity 1205 is formed in the rear end 1209 of the tooth 1200, extending longitudinally inward from the rear end 1204. The cavity 1205 has bearing surfaces that correspond to and interface with the bearing surfaces of the nose 1100. It also has reference longitudinal axis 1105 and transverse axis 1107. The cavity 1205 also includes a front portion 1224 and a rear portion 1222. The rear portion 1222 includes a set of eight substantially planar surfaces. Accordingly, in this exemplary implementation, the set of substantially planar surfaces includes a subset of having a top surface 1208a and a bottom surface 1208b, a subset of two side surfaces 1206a, 1206b, and a subset of four angled surfaces 1210a, 1210b, 1210c, 1210d. The four angled surfaces 1210a, 1210b, 1210c, 1210d may be bearing surfaces. Because each bearing surface is angled, each bearing surface is able to resist both horizontal and vertical loading that may be applied to the tooth 1200 during use. Both the top and bottom surfaces 1208a, 1208b and the side surfaces 1206a, 1206b may be non-bearing surfaces. In some examples, the non-bearing surfaces may not be substantially planar. For example, the non-bearing surfaces may be curved.

The forward portion 1224 also includes a forward set of eight substantially planar surfaces. Particularly the forward set includes a subset having a top 1214a surface and a bottom surface 1214b, a subset of two side surfaces 1212a, 1212b, and a subset of four angled surfaces 1216a, 1216b, 1216c, 1216d. The four angled surfaces 1216a, 1216b, 1216c, 1216d may be bearing surfaces. Again, because each bearing surface is angled, each bearing surface is able to resist both horizontal and vertical loading. The horizontal surfaces 1214a, 1214b may also be non-bearing surfaces. In some examples, the vertical surfaces 1212a, 1212b may be bearing surfaces. In some examples, however, the vertical surfaces 1212a, 1212b may be non-bearing surfaces.

Referring now to Fig. 11C, the nose 1100 includes a rear surface 1101 and a front octagonal-shaped abutment surface 1118. The front abutment surface 1118 may have an octagonal shape. The front abutment surface 1118 may be a fit surface as it is designed to make contact with a front abutment surface 1218 of the cavity 1205 (shown in Figs. 12A and 12B). The front abutment surface 1218 of the cavity 1205 may also have an octagonal shape. The rear surface 1201 at the rear end 1109 of the tooth 1200 may or may not make contact with the rear surface 1101 of the nose 1100.

In some implementations, the nose 1100 and the tooth 1200 may be designed symmetrically so that the tooth can be rotated 180 degrees and still fit appropriately on the tooth. This allows the tooth 1200 to be flipped after a certain period of wear. The tooth 1200 may then continue to be used in the flipped position. This extends the life of the tooth 1200.

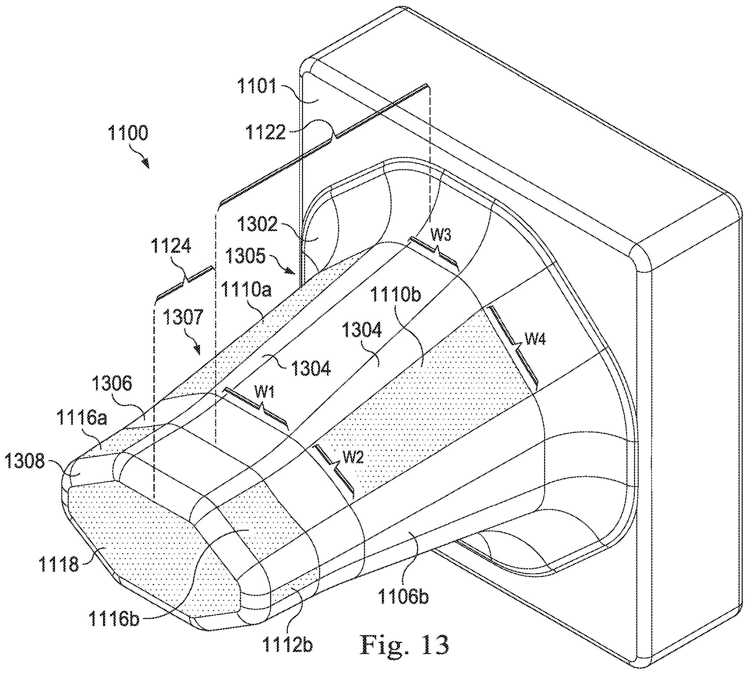

Fig. 13 is a perspective view of the nose 1100. In addition to the substantially planar surfaces 1106a, 1106b, 1108a, 1108b, 1110a, 1110b, 1110c, 1110d, 1112a, 1112b, 1114a, 1114b, 1116a, 1116b, 1116c, 1116d, both the forward portion 1124 and the rear portion 1122 may have curved surfaces positioned between the planar surfaces. In implementations having the rear surface 1101, the nose 1100 may include surfaces 1302 disposed between and transitioning from the rear surface 1101 to the eight substantially planar surfaces 1106a, 1106b, 1108a, 1108b, 1110a, 1110b, 1110c, 1110d of the rear portion 1122. The nose 1100 may also include elongated curved surfaces 1304 between adjacent edges of each of the planar surfaces 1106a, 1106b, 1108a, 1108b, 1110a, 1110b, 1110c, 1110d, 1112a, 1112b, 1114a, 1114b, 1116a, 1116b, 1116c, 1116d in both the forward portion 1124 and the rear portion 1122. The nose 1100 may also include curved surfaces 1306 positioned between the planar surfaces 1106a, 1106b, 1108a, 1108b, 1110a, 1110b, 1110c, 1110d of the rear portion 1122 and the planar surfaces of the forward portion 1124. The nose 1100 may also include curved surfaces 1308 positioned between the front abutment surface 1118 and the planar surfaces 1112a, 1112b, 1114a, 1114b, 1116a, 1116b, 1116c, 1116d of the forward portion 1124. In some implementations, these curved surfaces may be fillets or rounds intended to minimize locational stress during use. The curved surfaces may also help provide clearance for the cavity of the wear member.

In some examples, the cross-sectional width W1 of the top and bottom non-bearing surfaces 1108a, 1108b is different at the distal end 1307 of the rear portion 1122 than the cross-sectional width W3 at the proximal end 1305 of the rear portion 1122. For example, the cross-sectional width W1 of the top and bottom non-bearing surfaces 1108a, 1108b may be smaller at the distal end 1307 of the rear portion 1122 than the cross-sectional width W3 at the proximal end 1305 of the rear portion 1122 or vice versa. Furthermore, the cross-sectional width W2 of the bearing surfaces 1110a, 1110b, 1110c, and 1110d at the distal end 1307 of the rear portion 1122 may be different than the cross-sectional width W4 at the proximal end 1305. For example, the cross-sectional width W2 of the bearing surfaces 1110a, 1110b, 1110c, and 1110d at the distal end 1307 of the rear portion 1122 may be smaller than the cross-sectional width W4 at the proximal end 1305 or vice versa. Furthermore, the cross-sectional width W1 of the top and bottom surfaces 1108a, 1108b at the distal end 1307 of the rear portion 1122 may be different than the cross-sectional width W2 of the bearing surfaces 1110a, 1110b, 1110c, 1110d at the distal end 1307 of the rear portion 1122. For example, the cross-sectional width W1 of the top and bottom surfaces 1108a, 1108b at the distal end 1307 of the rear portion 1122 may be smaller than the cross-sectional width W2 of the bearing surfaces 1110a, 1110b, 1110c, 1110d at the distal end 1307 of the rear portion 1122 or vice versa. Furthermore, the cross-sectional width W3 of the top and bottom surfaces 1108a, 1108b at the proximal 1305 end of the rear portion 1122 may be different than the cross-sectional width W4 of the bearing surfaces 1110a, 1110b, 1110c, 1110d at the proximal end 1305 of the rear portion 1122. For example, the cross-sectional width W3 of the top and bottom surfaces 1108a, 1108b at the proximal 1305 end of the rear portion 1122 may be greater than the cross-sectional width W4 of the bearing surfaces 1110a, 1110b, 1110c, 1110d at the proximal end 1305 of the rear portion 1122 or vice versa.

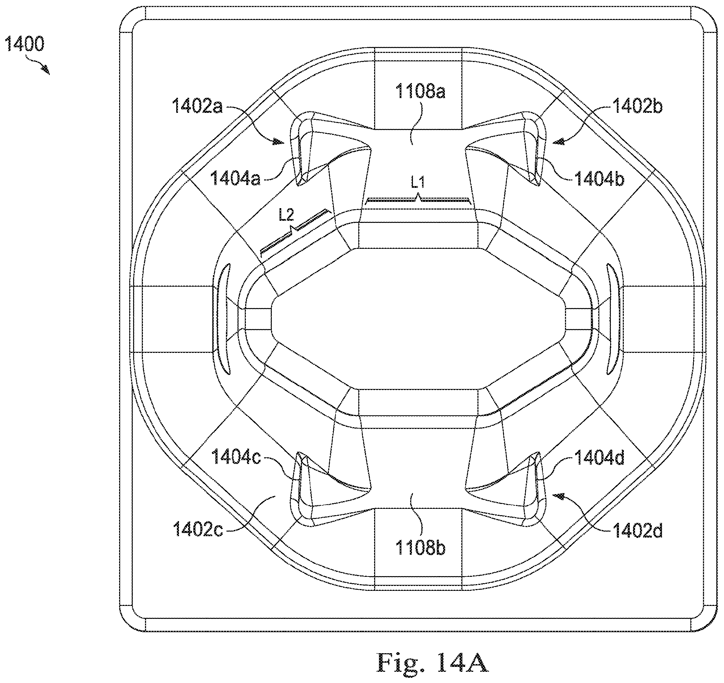

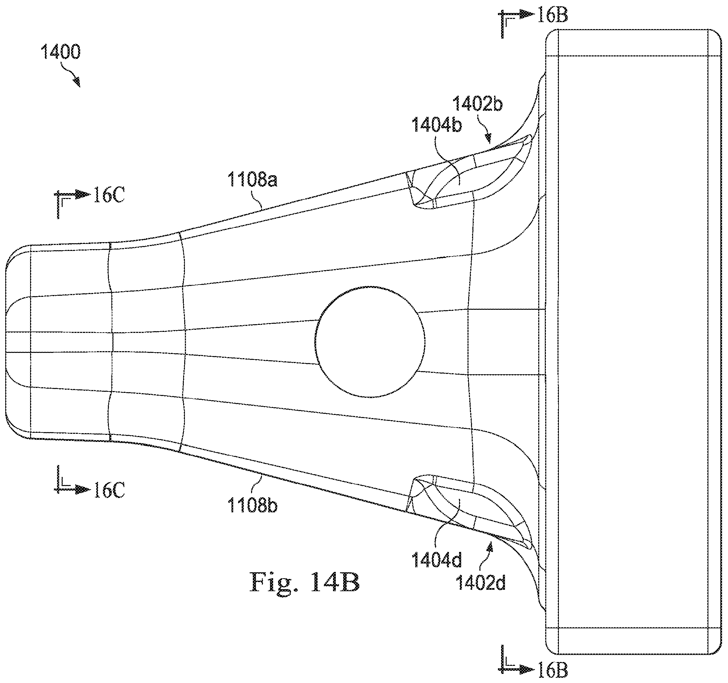

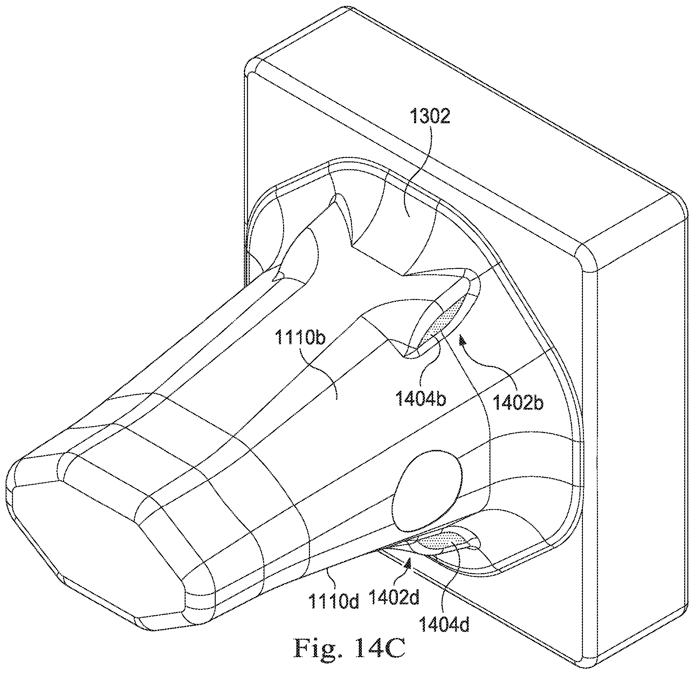

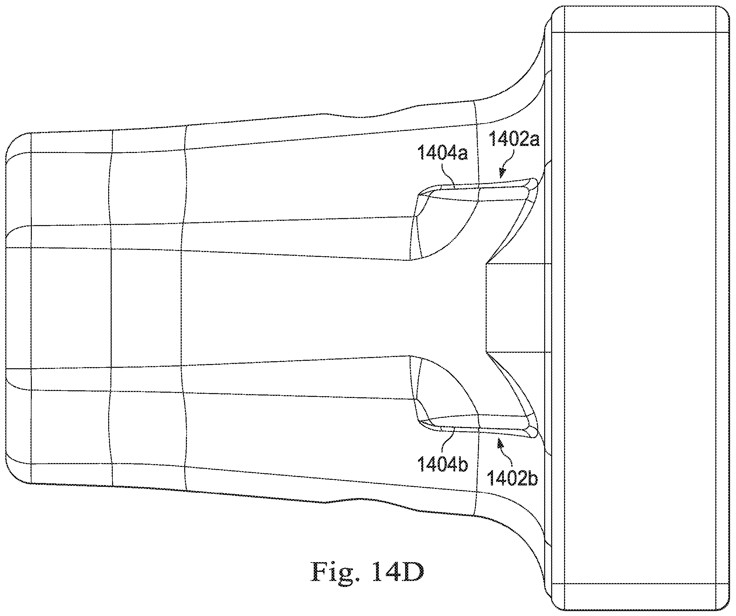

Fig. 14A shows a view of an illustrative adapter nose 1400 with torsion control features 1402a, 1402b, 1402c, 1402d that resist torsional movement of the wear member 1200 with respect to the nose 1100. Fig. 14B shows a side view of the adapter nose 1400 with torsion control features. Fig. 14C is a perspective view of the adapter nose 1400 with torsion control features. Fig. 14D is a top view of the adapter nose 1400 with torsion control features. In the exemplary implementation shown, the adapter nose 1400 includes the angled bearing surfaces described with reference to Figs. 11A, 11B, 11C, and 13. For convenience, these bearing surfaces will not be described again with reference to Figs. 14A, 14B, 14C, and 14D. The torsion control features 1402a, 1402b, 1402c, 1402d comprise projections that extend from the nose 1400. Each of the torsion control features includes a vertical, planar, outwardly facing surfaces 1404a, 1404b, 1404c, 1404d. The torsion control features 1402a, 1402b, 1402c, 1402d are positioned near the rearward end of the adapter nose 1400. The torsion control features 1402a, 1402b, 1402c, 1402d are also positioned such that the vertical surfaces 1404a, 1404b, 1404c, 1404d intersect the angled bearing surfaces 1110a, 1110b, 1110c, 1110d of the nose 1400. As illustrated in Fig. 14D, the vertical surfaces 1404a, 1402b, 1402c, 1404d are tapered towards the longitudinal axis. This allows the tooth 1200 to be removed from the nose 1100 more easily.

As best seen in the side view of Fig. 14B, the torsion control features 1402a, 1402b, 1402c, 1402d are contained within the boundary created by the planar surfaces 1108a and 1108b. In the exemplary embodiment shown, the adapter nose 1400 includes torsion control features 1402a, 1402b disposed on an upper portion and includes torsion control features 1402c, 1402d disposed on a lower portion. In some implementations, the adapter nose 1400 includes torsion control features on only one of the upper portion or the lower portion. Also, in the implementation shown, the torsion control features 1402a, 1402b are shown vertically aligned with the torsion control features 1402c, 1402d. In some implementations, the torsion control features are not vertically aligned.

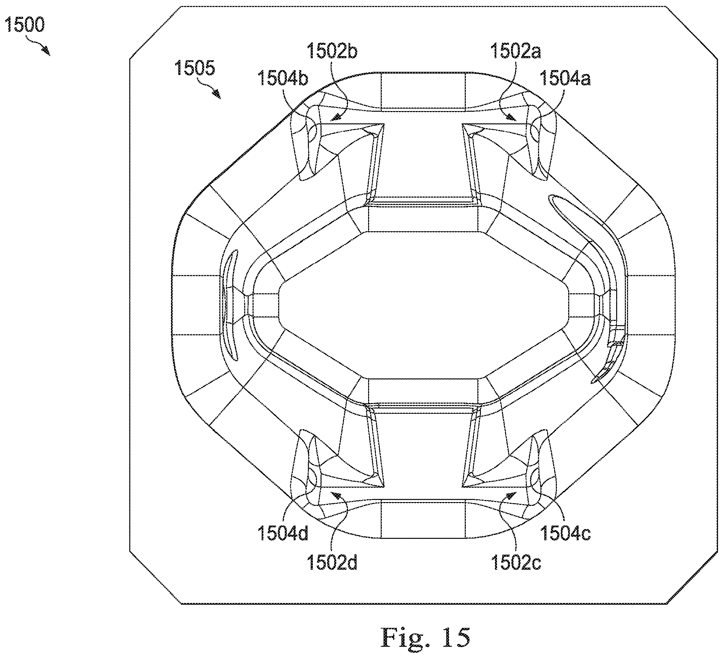

Fig. 15 is a diagram showing a tooth 1500 having a cavity 1505 designed to fit an adapter nose, such as the adapter nose 1400, with torsion control features, such as the torsion control features 1402a, 1402b, 1402c, 1402d. The cavity 1505 may include a number of pockets 1502a, 1502b, 1502c, 1502d. The pockets 1502a, 1502b, 1502c, 1502d may be designed to receive the torsion control features 1402a, 1402b, 1402c, 1402d of the adapter nose 1400. In the exemplary implementation shown, the pockets 1502a, 1502b, 1502c, 1502d include vertical, planar, inward-facing surfaces 1504a, 1504b, 1504c, 1504d that correspond to the vertical surfaces 1404a, 1404b, 1404c, 1404d of the adapter nose 1400. Thus, the vertical surfaces 1404a, 1404b, 1404c, 1404d of the nose 1400 are designed to engage and interface with the vertical surfaces 1504a, 1504b, 1504c, 1504d of the tooth 1500 so as to resist twisting movement between the nose 1400 and the tooth 1500. The tooth 1500 may have, as indicated with reference to Figs 12A and 12B, planar bearing surfaces that interface with planar bearing surfaces on the adapter nose 1400.

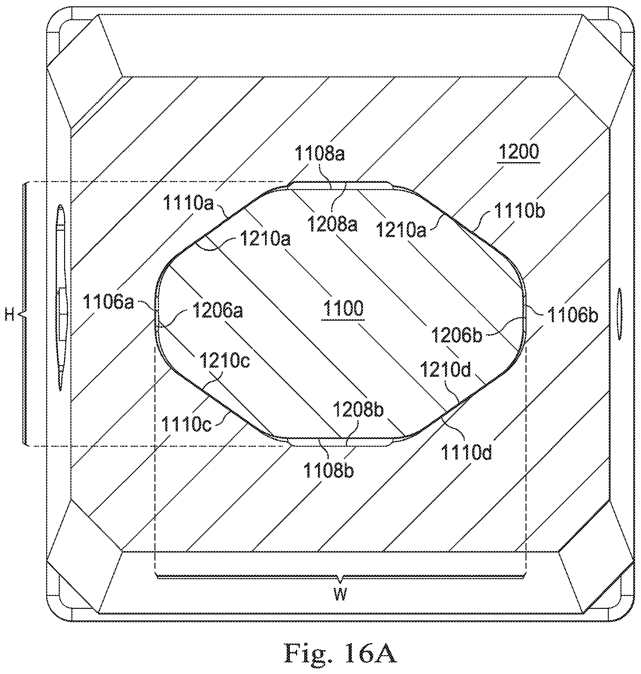

Fig. 16A shows a cross-section of the adapter nose 1100 orthogonal to the longitudinal axis (e.g., 1105, Fig. 11B) in an assembled condition. Accordingly, Fig. 16A also illustrates the cross-section of the tooth 1200. As illustrated, the angled bearing surfaces 1110a, 1110b, 1110c, 1110d of the nose 1100 fit against the angled bearing surfaces 1210a, 1210b, 1210c, 1210d of the tooth 1200. These angled bearing surfaces minimize or prevent both vertical and lateral movement of the tooth 1200 relative to the adapter nose 1100. In some examples, there may be a gap between the horizontal non-bearing surfaces 1108a, 1108b of the nose and the horizontal non-bearing surfaces 1208a, 1208b of the tooth 1200. Likewise, there may be a gap between the vertical non-bearing surfaces 1106a, 1106b of the nose and the vertical non-bearing surfaces 1206a, 1206b of the tooth 1200. In some examples, however, the non-bearing surfaces of both the nose 1100 and the tooth 1200 may make contact when the tooth 1200 is fit over the nose 1100. Because of the angled bearing surfaces, both vertical and lateral movement may be minimized.

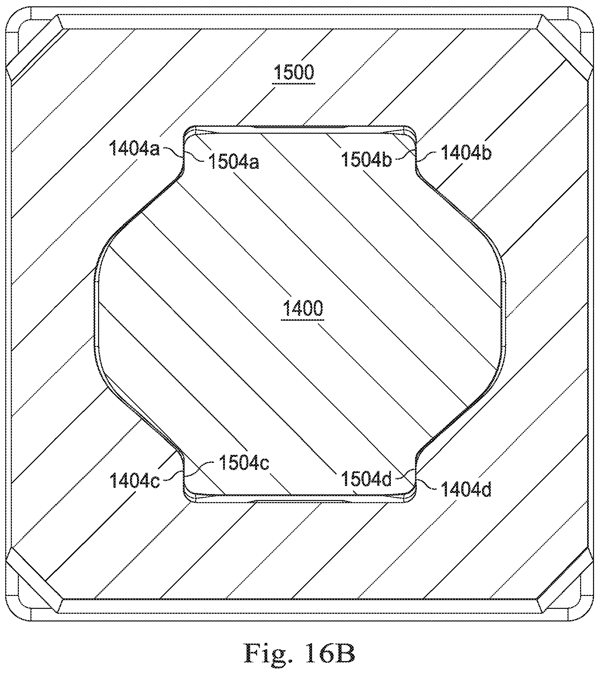

Fig. 16B shows a cross-section orthogonal to the longitudinal axis of the adapter nose 1400 with torsion control features. As described above, the vertical surfaces 1404a, 1404b, 1404c, 1404d of the nose 1400 fit against the vertical surfaces 1504a, 1504b, 1504c, 1504d of the tooth 1500. Thus, the torsion control features 1402a, 1402b, 1402c, 1402d are arranged to resist twisting movement and torsion between the nose 1400 and the tooth 1500. This may help stabilize the tooth 1500 on the adapter nose 1400 during use.

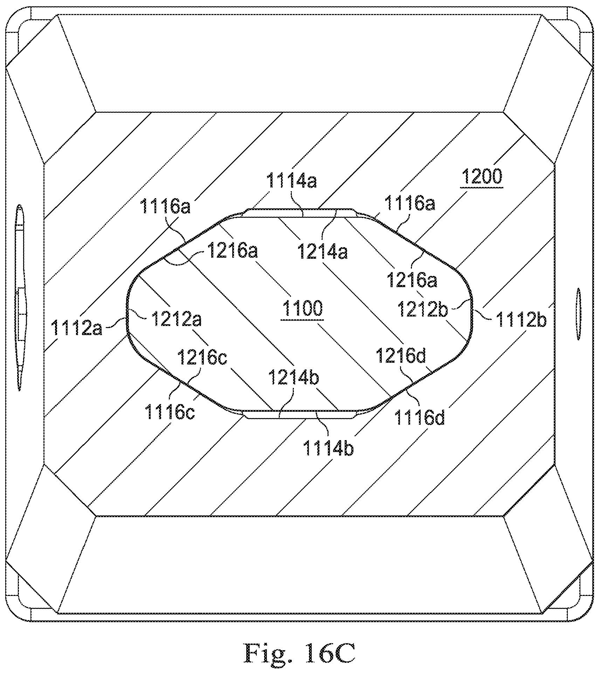

Fig. 16C shows a cross-section of the forward portion of the adapter nose 1100. Fig. 16C also illustrates the cross-section of the tooth 1200. As illustrated, the angled bearing surfaces 1116a, 1116b, 1116c, 1116d of the nose 1100 fit against the angled bearing surfaces 1216a, 1216b, 1216c, 1216d of the tooth 1200. In some examples, there may be a gap between the horizontal non-bearing surfaces 1114a, 1114b of the nose and the horizontal non-bearing surfaces 1214a, 1214b of the tooth 1200. In the present example, the vertical surfaces 1112a, 1112b of the nose 1100 and the vertical surfaces 1212a, 1212b of the tooth 1200 are bearing surfaces and thus there is no gap between them. In some examples, however, there may be a gap between the vertical surfaces 1112a, 1112b of the nose 1100 and the vertical surfaces 1212a, 1212b of the tooth 1200. In this exemplary implementation, the angled bearing surfaces 1116c and 1116d are adjacent to, but do not form a part of, a bottom surface 1114b of the adapter nose 1100. This angled design may, in some instances, extend the useful life of the adapter nose 1100. It is not uncommon during use for an operator to wear a bottom portion of a tooth away, inadvertently exposing and wearing a bottom surface of the adapter nose 1100. In conventional systems utilizing a bottommost surface of an adapter nose as a bearing surface, such where may adversely affect the stability of a subsequent tooth placed on the adapter nose. A worn bearing surface may introduce wobble, further accelerating wear, and potentially permanently damaging the adapter nose. However, the exemplary implementation disclosed herein includes bearing surfaces on angled bottom surfaces, rather than a horizontal bottom surface. Because of this, if an operator inadvertently wears away a portion of a bottom surface of the adapter nose, the angled bearing surfaces may still provide stability to the tooth in both the horizontal and vertical directions. This may increase the useful life of the adapter nose because the tooth may be properly supported even with a worn bottom surface of the adapter nose.

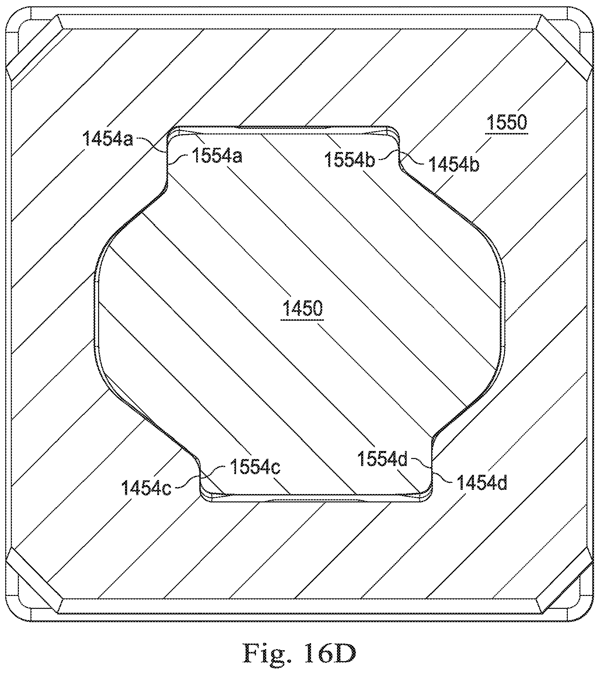

Fig. 16D illustrates a cross-section of the adapter nose 1450 with offset torsion control features. For example, surface 1454a is offset from surface 1454c. Similarly, surface 1454b is offset from surface 1454d. The tooth 1550 includes corresponding surfaces 1554a, 1554b, 1554c, 1554d. The offsets are such that the tooth 1550 can still be flipped upside down and fit on the nose 1450. In other words, the tooth is engageable with the adapter nose 1450 in two rotational positions.

Although described as having eight planar surfaces, some implementations of the adapter noses and the teeth described herein include four angled planar surfaces and less than four planar vertical or horizontal surfaces. In some implementations, the adapter noses and teeth described herein include a round or arcing outer surface connecting two adjacent planar angled surfaces. For example, some implementations do not include the side vertical, with rounds connecting the adjacent surfaces 106a and 1106b. In these implementations, the surfaces 1106a and 1106b may be replaced with a round surface connecting planar bearing surfaces 1110a and 1110c. The tooth may be formed to match. In some implementations, the adapter nose may be formed with eight planar surfaces, but the cavity of the tooth, such as cavity 1205, may be formed with only six planar surfaces. In some examples, the vertical surfaces 1206a and 1206b described herein may be rounded, while the cavity 1205 may still be formed to engage and fit the planar angled bearing surfaces of the adapter nose.

## Claims

1. A hollow ground-engaging wear member (104, 1200) attachable to a support structure, the wear member comprising:
a leading end (708) arranged to engage ground and a rear end (703) having a cavity (702) formed therein, the cavity having an inner surface and having a longitudinally extending axis, the cavity having a front portion (720) and having a rear portion (722) adjacent the rear end,
the inner surface having opposing side walls (704f, 704h) and having opposing upper and lower walls (704e, 704g) forming an upper inner surface and a lower inner surface,
the upper inner surface and the lower inner surface each having a centrally disposed, inwardly protruding surface portion (706, 707) arranged to provide a bearing fit with the support structure, each inwardly protruding surface portion being disposed only in the rear portion of the cavity and shaped to form a cross-sectional arc having tangents at oblique angles, the inwardly protruding surface portion being arranged to support loads imposed at the leading end, and
a pair of holes (711, 725) in the respective opposing side walls, each hole of the pair of holes arranged to receive a locking pin, wherein the inwardly protruding surface portion of the upper inner surface and the inwardly protruding surface portion of the lower inner surface are positioned at least partially rearward of the pair of holes.

2. The wear member of claim 1, wherein the upper inner surface and the lower inner surface each have only one single, centrally disposed, inwardly protruding surface portion.

3. The wear member of claim 1, wherein the inwardly protruding surface portion of the upper inner surface is longitudinally aligned with the inwardly protruding surface portion of the lower inner surface.

4. The wear member of claim 1, wherein the inwardly protruding surface portion of the upper inner surface is longitudinally offset from the inwardly protruding surface portion of the lower inner surface.

5. The wear member of claim 1, wherein the inwardly protruding surface portions are substantially elliptical.

6. The wear member of claim 1, wherein a transverse width of the inwardly protruding surface portion of the upper inner surface is within a range of about 60-80% of a width of the upper inner surface.

7. The wear member of claim 1, wherein the longitudinal length of the inwardly protruding surface portion of the upper inner surface is within a range of about 1-50 percent larger than a transverse width of the inwardly protruding surface portion of the upper inner surface.

8. A hollow ground-engaging wear member (104, 1200) attachable to a support structure, the wear member comprising:
a leading end (708) arranged to engage ground and a rear end (703) having a cavity (702) formed therein, the cavity having an inner surface and having a longitudinally extending axis, the cavity having a front portion (720) and having a rear portion (722) adjacent the rear end,
the inner surface having opposing side walls (704f, 704h) and having opposing upper and lower walls (704e, 704g) forming an upper inner surface and a lower inner surface,
the upper inner surface and the lower inner surface each having a centrally disposed, inwardly protruding surface portion (706, 707) arranged to provide a bearing fit with the support structure, each inwardly protruding surface portion being disposed only in the rear portion of the cavity and shaped to form a cross-sectional arc having tangents at oblique angles, the inwardly protruding surface portion being arranged to support loads imposed at the leading end, and
a pair of holes (711, 725) in the respective opposing side walls, each hole of the pair of holes arranged to receive a locking pin, wherein each hole comprises a portion that is disposed forwardly of each inwardly protruding surface portion.

9. A support structure (102) configured for co-operation with a wear member to receive the wear member, the support structure comprising:
a nose (203) arranged to fit within a cavity of the wear member, the nose comprising:
a front portion (205) having a plurality of outwardly facing surfaces (202), the outwardly facing surfaces angled with respect to a longitudinal axis (211) of the nose at a first angle;
a rear portion (207) having two outwardly facing side surfaces (204f, 204h), and outwardly facing top and bottom surfaces (204e, 204g), the outwardly facing side surfaces and the outwardly facing top and bottom surfaces being angled with respect to the longitudinal axis at a second angle that is different than the first angle;
a first concave surface (210) positioned on one of the outwardly facing top and bottom surfaces, the first concave surface being disposed only in the rear portion;
a second concave surface (213) positioned on the other of the outwardly facing top and bottom surfaces, the second concave surface being disposed only in the rear portion; and
a through-hole extending between the two outwardly facing side surfaces, the through-hole arranged to receive a locking pin, wherein the first concave surface and the second concave surface are positioned at least partially rearward of the through-hole.

10. The support structure of claim 9, wherein a longitudinal length of the first and the second concave surfaces is larger than a transverse width of the first and the second concave surfaces.

11. The support structure of claim 9, wherein a transverse width of each of the concave surfaces is about 70% of a width of the outwardly facing top and bottom surfaces.

## Patentansprüche

1. Hohles Bodeneingriffsverschleißelement (104, 1200), das an einer Stützstruktur anbringbar ist, wobei das Verschleißelement Folgendes beinhaltet:
ein vorderes Ende (708), das zum Eingriff in den Boden angeordnet ist, und ein hinteres Ende (703) mit einem darin ausgebildeten Hohlraum (702), wobei der Hohlraum eine Innenfläche und eine sich in Längsrichtung erstreckende Achse aufweist, wobei der Hohlraum einen vorderen Abschnitt (720) und einen hinteren Abschnitt (722) neben dem hinteren Ende aufweist,
wobei die Innenfläche gegenüberliegende Seitenwände (704f, 704h) und gegenüberliegende obere und untere Wände (704e, 704g) aufweist, die eine obere Innenfläche und eine untere Innenfläche bilden,
wobei die obere Innenfläche und die untere Innenfläche jeweils einen mittig eingerichteten, nach innen vorstehenden Flächenabschnitt (706, 707) aufweisen, der zum Bereitstellen einer Lagerpassung mit der Stützstruktur angeordnet ist, wobei jeder nach innen vorstehende Flächenabschnitt nur im hinteren Abschnitt des Hohlraums eingerichtet und so geformt ist, dass er einen Querschnittsbogen mit Tangenten in schrägen Winkeln bildet, wobei der nach innen vorstehende Flächenabschnitt zum Stützen von Lasten angeordnet ist, die am vorderen Ende auferlegt werden, und ein Paar Löcher (711, 725) in den jeweiligen gegenüberliegenden Seitenwänden, wobei jedes Loch des Paars Löcher zum Aufnehmen eines Verriegelungsstifts angeordnet ist, wobei der nach innen vorstehende Flächenabschnitt der oberen Innenfläche und der nach innen vorstehende Flächenabschnitt der unteren Innenfläche zumindest teilweise hinter dem Paar Löcher positioniert sind.

2. Verschleißelement gemäß Anspruch 1, wobei die obere Innenfläche und die untere Innenfläche jeweils nur einen einzelnen, mittig eingerichteten, nach innen vorstehenden Flächenabschnitt aufweisen.

3. Verschleißelement gemäß Anspruch 1, wobei der nach innen vorstehende Flächenabschnitt der oberen Innenfläche in Längsrichtung auf den nach innen vorstehenden Flächenabschnitt der unteren Innenfläche ausgerichtet ist.

4. Verschleißelement gemäß Anspruch 1, wobei der nach innen vorstehende Flächenabschnitt der oberen Innenfläche in Längsrichtung von dem nach innen vorstehenden Flächenabschnitt der unteren Innenfläche versetzt ist.

5. Verschleißelement gemäß Anspruch 1, wobei die nach innen vorstehenden Flächenabschnitte im Wesentlichen elliptisch sind.

6. Verschleißelement gemäß Anspruch 1, wobei eine Querbreite des nach innen vorstehenden Flächenabschnitts der oberen Innenfläche innerhalb eines Bereichs von etwa 60-80 % einer Breite der oberen Innenfläche liegt.

7. Verschleißelement gemäß Anspruch 1, wobei die Längslänge des nach innen vorstehenden Flächenabschnitts der oberen Innenfläche innerhalb eines Bereichs von etwa 1-50 Prozent größer als eine Querbreite des nach innen vorstehenden Flächenabschnitts der oberen Innenfläche liegt.

8. Ein hohles Bodeneingriffsverschleißelement (104, 1200), das an einer Stützstruktur anbringbar ist, wobei das Verschleißelement Folgendes beinhaltet:
ein vorderes Ende (708), das zum Eingriff in den Boden angeordnet ist, und ein hinteres Ende (703) mit einem darin ausgebildeten Hohlraum (702), wobei der Hohlraum eine Innenfläche und eine sich in Längsrichtung erstreckende Achse aufweist, wobei der Hohlraum einen vorderen Abschnitt (720) und einen hinteren Abschnitt (722) neben dem hinteren Ende aufweist,
wobei die Innenfläche gegenüberliegende Seitenwände (704f, 704h) und gegenüberliegende obere und untere Wände (704e, 704g) aufweist, die eine obere Innenfläche und eine untere Innenfläche bilden,
wobei die obere Innenfläche und die untere Innenfläche jeweils einen mittig eingerichteten, nach innen vorstehenden Flächenabschnitt (706, 707) aufweisen, der zum Bereitstellen einer Lagerpassung mit der Stützstruktur angeordnet ist, wobei jeder nach innen vorstehende Flächenabschnitt nur im hinteren Abschnitt des Hohlraums eingerichtet und so geformt ist, dass er einen Querschnittsbogen mit Tangenten in schrägen Winkeln bildet, wobei der nach innen vorstehende Flächenabschnitt zum Stützen von Lasten angeordnet ist, die am vorderen Ende auferlegt werden, und ein Paar Löcher (711, 725) in den jeweiligen gegenüberliegenden Seitenwänden, wobei jedes Loch des Paars Löcher zum Aufnehmen eines Verriegelungsstifts angeordnet ist, wobei jedes Loch einen Abschnitt beinhaltet, der vor jedem nach innen vorstehenden Flächenabschnitt eingerichtet ist.

9. Ein Stützstruktur (102), die zum Zusammenwirken mit einem Verschleißelement zum Aufnehmen des Verschleißelements konfiguriert ist, wobei die Stützstruktur Folgendes beinhaltet:
eine Nase (203), die zum Passen in einen Hohlraum des Verschleißelements angeordnet ist, wobei die Nase Folgendes beinhaltet:
einen vorderen Abschnitt (205) mit einer Vielzahl von nach außen weisenden Flächen (202), wobei die nach außen weisenden Flächen in Bezug auf eine Längsachse (211) der Nase in einem ersten Winkel abgewinkelt sind;
einen hinteren Abschnitt (207) mit zwei nach außen weisenden Seitenflächen (204f, 204h) und einer nach außen weisenden oberen und unteren Fläche (204e, 204g), wobei die nach außen weisenden Seitenflächen und die nach außen weisende obere und untere Fläche in Bezug auf die Längsachse in einem zweiten Winkel abgewinkelt sind, der sich von dem ersten Winkel unterscheidet;
eine erste konkave Fläche (210), die auf einer der nach außen weisenden oberen und unteren Fläche positioniert ist, wobei die erste konkave Fläche nur in dem hinteren Abschnitt eingerichtet ist;
eine zweite konkave Fläche (213), die auf der anderen der nach außen weisenden oberen und unteren Fläche positioniert ist, wobei die zweite konkave Fläche nur in dem hinteren Abschnitt eingerichtet ist; und
ein Durchgangsloch, das sich zwischen den zwei nach außen weisenden Seitenflächen erstreckt, wobei das Durchgangsloch zum Aufnehmen eines Verriegelungsstifts angeordnet ist, wobei die erste konkave Fläche und die zweite konkave Fläche zumindest teilweise hinter dem Durchgangsloch positioniert sind.

10. Stützstruktur gemäß Anspruch 9, wobei eine Längslänge der ersten und der zweiten konkaven Fläche größer als eine Querbreite der ersten und der zweiten konkaven Fläche ist.

11. Stützstruktur gemäß Anspruch 9, wobei eine Querbreite jeder der konkaven Flächen etwa 70 % einer Breite der nach außen weisenden oberen und unteren Fläche beträgt.

## Revendications

1. Un élément d'usure creux d'attaque du sol (104, 1200) pouvant être fixé à une structure de support, l'élément d'usure comprenant :
une extrémité de tête (708) agencée pour attaquer le sol et une extrémité arrière (703) ayant une cavité (702) formée dans celle-ci, la cavité ayant une surface interne et ayant un axe s'étendant longitudinalement, la cavité ayant une portion avant (720) et ayant une portion arrière (722) adjacente à l'extrémité arrière,
la surface interne ayant des parois latérales opposées (704f, 704h) et ayant des parois supérieure et inférieure opposées (704e, 704g) formant une surface interne supérieure et une surface interne inférieure,
la surface interne supérieure et la surface interne inférieure ayant chacune une portion de surface faisant saillie (706, 707) vers l'intérieur disposée centralement agencée pour fournir un ajustement d'appui avec la structure de support, chaque portion de surface faisant saillie vers l'intérieur étant disposée uniquement dans la portion arrière de la cavité et étant conformée pour former un arc de section transversale ayant des tangentes selon des angles obliques, la portion de surface faisant saillie vers l'intérieur étant agencée pour supporter des charges imposées au niveau de l'extrémité de tête, et
une paire de trous (711, 725) dans les parois latérales opposées respectives, chaque trou de la paire de trous étant agencé pour recevoir une broche de verrouillage, où la portion de surface faisant saillie vers l'intérieur de la surface interne supérieure et la portion de surface faisant saillie vers l'intérieur de la surface interne inférieure sont positionnées au moins partiellement vers l'arrière de la paire de trous.

2. L'élément d'usure de la revendication 1, où la surface interne supérieure et la surface interne inférieure ont chacune une seule portion de surface faisant saillie vers l'intérieur disposée centralement.

3. L'élément d'usure de la revendication 1, où la portion de surface faisant saillie vers l'intérieur de la surface interne supérieure est alignée longitudinalement avec la portion de surface faisant saillie vers l'intérieur de la surface interne inférieure.

4. L'élément d'usure de la revendication 1, où la portion de surface faisant saillie vers l'intérieur de la surface interne supérieure est décalée longitudinalement par rapport à la portion de surface faisant saillie vers l'intérieur de la surface interne inférieure.

5. L'élément d'usure de la revendication 1, où les portions de surface faisant saillie vers l'intérieur sont substantiellement elliptiques.

6. L'élément d'usure de la revendication 1, où une largeur transversale de la portion de surface faisant saillie vers l'intérieur de la surface interne supérieure est comprise dans un intervalle d'environ 60 à 80 % d'une largeur de la surface interne supérieure.

7. L'élément d'usure de la revendication 1, où la longueur longitudinale de la portion de surface faisant saillie vers l'intérieur de la surface interne supérieure est comprise dans un intervalle environ 1 à 50 pour cent plus grand qu'une largeur transversale de la portion de surface faisant saillie vers l'intérieur de la surface interne supérieure.

8. Un élément d'usure creux d'attaque du sol (104, 1200) pouvant être fixé à une structure de support, l'élément d'usure comprenant :
une extrémité de tête (708) agencée pour attaquer le sol et une extrémité arrière (703) ayant une cavité (702) formée dans celle-ci, la cavité ayant une surface interne et ayant un axe s'étendant longitudinalement, la cavité ayant une portion avant (720) et ayant une portion arrière (722) adjacente à l'extrémité arrière,
la surface interne ayant des parois latérales opposées (704f, 704h) et ayant des parois supérieure et inférieure opposées (704e, 704g) formant une surface interne supérieure et une surface interne inférieure,
la surface interne supérieure et la surface interne inférieure ayant chacune une portion de surface faisant saillie (706, 707) vers l'intérieur disposée centralement agencée pour fournir un ajustement d'appui avec la structure de support, chaque portion de surface faisant saillie vers l'intérieur étant disposée uniquement dans la portion arrière de la cavité et étant conformée pour former un arc de section transversale ayant des tangentes selon des angles obliques, la portion de surface faisant saillie vers l'intérieur étant agencée pour supporter des charges imposées au niveau de l'extrémité de tête, et
une paire de trous (711, 725) dans les parois latérales opposées respectives, chaque trou de la paire de trous étant agencé pour recevoir une broche de verrouillage, où chaque trou comprend une portion qui est disposée vers l'avant de chaque portion de surface faisant saillie vers l'intérieur.

9. Une structure de support (102) configurée pour coopérer avec un élément d'usure afin de recevoir l'élément d'usure, la structure de support comprenant :
un nez (203) agencé pour s'ajuster à l'intérieur d'une cavité de l'élément d'usure, le nez comprenant :
une portion avant (205) ayant une pluralité de surfaces orientées vers l'extérieur (202), les surfaces orientées vers l'extérieur étant inclinées par rapport à un axe longitudinal (211) du nez selon un premier angle ;
une portion arrière (207) ayant deux surfaces latérales orientées vers l'extérieur (204f, 204h), et des surfaces de dessus et de dessous orientées vers l'extérieur (204e, 204g), les surfaces latérales orientées vers l'extérieur et les surfaces de dessus et de dessous orientées vers l'extérieur étant inclinées par rapport à l'axe longitudinal selon un deuxième angle qui est différent du premier angle ;
une première surface concave (210) positionnée sur l'une des surfaces de dessus et de dessous orientées vers l'extérieur, la première surface concave étant disposée uniquement dans la portion arrière ;
une deuxième surface concave (213) positionnée sur l'autre des surfaces de dessus et de dessous orientées vers l'extérieur, la deuxième surface concave étant disposée uniquement dans la portion arrière ; et
un trou traversant s'étendant entre les deux surfaces latérales orientées vers l'extérieur, le trou traversant étant agencé pour recevoir une broche de verrouillage, où la première surface concave et la deuxième surface concave sont positionnées au moins partiellement vers l'arrière du trou traversant.

10. La structure de support de la revendication 9, où une longueur longitudinale des première et deuxième surfaces concaves est plus grande qu'une largeur transversale des première et deuxième surfaces concaves.

11. La structure de support de la revendication 9, où une largeur transversale de chacune des surfaces concaves est d'environ 70 % d'une largeur des surfaces de dessus et de dessous orientées vers l'extérieur.
